# EUROPÄISCHE PATENTSCHRIFT

(11) **EP 3 378 575 B1**
(45) Veröffentlichungstag und Bekanntmachung des Hinweises auf die Patenterteilung: **08.12.2021**
(21) Anmeldenummer: 18159452.4
(22) Anmeldetag: 01.03.2018
(51) Int. Cl.: B07C 5/36

(54) **TRANSPORTANORDNUNG UND LEERGUTANNAHMEANORDNUNG**
TRANSPORT ARRANGEMENT AND DEVICE FOR RETURNED EMPTIES
DISPOSITIF DE TRANSPORT ET DISPOSITIF DE RÉCEPTION D'ARTICLES CONSIGNÉS

(30) Priorität: 21.03.2017 DE 102017106021
(43) Veröffentlichungstag der Anmeldung: 26.09.2018
(73) Patentinhaber: Wincor Nixdorf International GmbH, 33106 Paderborn (DE)
(72) Erfinder: SCHRÖDER, Berthold, 98693 Ilmenau (DE)

(56) Entgegenhaltungen:
- WO-A1-99/12834
- DE-A1-102013 202 950

## Beschreibung

Die Erfindung betrifft eine Transportanordnung und eine Leergutannahmeanordnung gemäß dem Patentansprüchen 1 und 9.

Ein Rücknahmesystem kann Teil einer Rückführungskette sein, welche mittels der Leergutrücknahmeanlage zurückgenommene leere Behälter beispielsweise einer Wiederverwendung oder einer Verwertung (z.B. zur Rohstoff-Rückgewinnung) zuführt. In der Lebensmittelindustrie werden die leeren Behälter auch als Leergut bezeichnet und das Rücknahmesystem als Leergutrücknahmeanlage oder Leergutrücknahmeautomat.

Das mittels der Leergutrücknahmeanlage zurückgenommenes Leergut kann je nach Einsatzgebiet der Leergutrücknahmeanlage sortiert werden. Dazu kommen verzweigte Transportsysteme zum Einsatz, welche das Leergut z.B. in entsprechende Container oder Aufbewahrungsbereiche sortieren. Beispielsweise kann die Leergutrücknahmeanlage an Stellen, an denen sich das Transportsystem verzweigt, eine Sortiervorrichtung aufweisen. Mittels der Sortiervorrichtung kann das Leergut auf verschiedene Transportstrecken des Transportsystems verteilt werden, welche nebeneinander (horizontale Verteilung) und/oder übereinander (vertikale Verteilung) verlaufen können. Insbesondere erfordert ein geringes Platzangebot häufig übereinander angeordnete Transportebenen, auf welche das Leergut verteilt wird.

Der Durchsatz und der Transportablauf des Transportsystems werden herkömmlicherweise von der Arbeitsgeschwindigkeit und Zuverlässigkeit der einzelnen Sortiervorrichtungen beschränkt. Beispielsweise können zu langsame Sortiervorrichtungen eine Art "Flaschenhals" bilden, welche Rückstau erzeugen und somit den Transportablauf des gesamten Transportsystems hemmen können. Alternativ oder zusätzlich können unzuverlässige Sortiervorrichtungen das Leergut falsch verteilen. Neben dem Aufwand, welcher mit der Korrektur des Sortierfehlers verbunden ist, kann eine Staustrecke, welche für geringe Mengen an Leergut ausgelegt ist, schnell volllaufen, wenn dieser aufgrund eines Sortierfehlers zu viel Leergut zugeführt wird.

Ein herkömmliches Transportsystem kann beispielsweise langsam sein, wenn Leergut angehoben und/oder mit besonders hohem Gewicht (z.B. volle Leergutkisten) verteilt werden muss. Ebenso können Sortierfehler auftreten, wenn das Leergut nicht eindeutig klassifiziert werden kann. Herkömmlicherweise kann die Unzuverlässigkeit steigen, wenn eine große Anzahl von Leerguttypen und/oder diese mit hoher Geschwindigkeit (d.h. hohem Durchsatz) sortiert werden sollen.

Die US 6 227 377 B1 beschreibt eine Transportvorrichtung zum Transportieren von Paketen, die sowohl transportiert als auch sortiert werden, kein Bedienpersonal erfordert, einfach aufgebaut ist, wenig Wartung erfordert, geeignet ist für existierende Prozesse, einen hohen Durchsatz an sortierten Artikeln bereitstellt pro belegter Grundfläche und mit einer Geschwindigkeit arbeitet, die mit anderen automatisierten Geräten in einem automatisierten Prozess kompatibel ist. Die WO 2006/038 882 A1 beschreibt, mehrere Transportstrecken für Pakete zusammenzuführen. Die DE 10 2009 025 199 A1 beschreibt einen Flaschenrückgabeautomaten, welcher personalintensive, zeitraubende, eintönige und dadurch mit Fehlern behaftete manuelle Arbeit und über die Jahre Kosten eingespart. Die DE 15 06 444 A beschreibt das Sortieren briefähnlicher Samenbeutel.

Die WO 99/12834 Al beschreibt eine Transportvorrichtung zum Transportieren von Paketen, die sowohl transportiert als auch logistisch sortiert werden, wozu die Transportvorrichtung individualisierte Markierungen der Pakete erfasst und den Strom aus Paketen auf Grundlage der individualisierten Markierung auf verschiedene Transportstrecken aufteilt, indem auf Grundlage der erfassten Markierung vorher gespeicherte und jedem Paket zugeordnete logistische Zieldaten abgerufen werden.

DE 10 2013 202950 Al offenbart eine Transportvorrichtung zum Transportieren von Paketen, die in einen Transportbehälter transportiert als auch einsortiert werden sollen. Dazu sollen die Pakete gemäß ihren Eigenschaften zuvor in Gruppen aufgeteilt und zwischengelagert werden.

Demgegenüber wird gemäß dem Patentanspruch 1 eine Transportanordnung bereitgestellt, welche ein Bewegungsgetriebe aufweist, das anschaulich ein schnelleres vertikales Verteilen mit geringerer Unzuverlässigkeit (bzw. Fehlerquote) ermöglicht. Genauer gesagt weist das Bewegungsgetriebe gemäß dem Patentanspruch 1 einen Exzenter, eine Spindel und/oder einen Kniehebel-Mechanismus auf, welche eine schnelle Schwenkbewegung ermöglichen.

Anschaulich kann die Transportanordnung eingerichtet sein, das Leergut zu klassifizieren (z.B. auf Basis seines Gewichtes) und in vertikaler Richtung zu verteilen. Das Verteilen auf Grundlage der Klassifizierung kann auch als Sortieren bezeichnet werden.

Gemäß verschiedenen Ausführungsformen wird eine Transportanordnung bereitgestellt, deren Verteilen-Modus (allgemeiner auch als Betriebsmodus bezeichnet) umschaltbar eingerichtet sein kann. Beispielsweise kann wahlweise (z.B. wie von Nutzer gewünscht) z.B. schweres Leergut (z.B. volle Leergut-Kästen) nach oben transportiert werden. Alternativ kann beispielsweise leichtes Leergut z.B. nach unten transportiert werden.

Je nach Größe oder Statur eines Marktmitarbeiters oder einer Marktmitarbeiterin ist es für ihn oder sie ergonomisch besser/angenehmer, schwere Leergutkisten in eine obere oder in eine untere Transportebene zu transportieren. Hierfür ist ein schneller Wechsel der Transportführung durch entsprechendes nutzerseitiges Einstellen bzw. Auswählen des Bedienmodus ermöglicht. Auf diese Weise kann der "Weg", den der Marktmitarbeiter oder die Marktmitarbeiterin noch von der Transportebene anheben muss, auf die Größe und die Wünsche des Marktmitarbeiters oder der Marktmitarbeiterin hin optimiert. So können beispielsweise die Leergutkisten bodennah bereitgestellt werden und/oder das Auffüllen von leeren Leergut-Kästen erleichtert werden.

Gemäß verschiedenen Ausführungsformen werden bereitgestellt: eine schnelle Sortiermöglichkeit, ein schneller Transportebenen-Wechsel mittels eines Exzenterhubgetriebes, ein Sortieren mittels Gewichtsermittlung des Leerguts (z.B. der Leergutkästen), ein Sortieren mittels Ermittelns eines Farbspektrums/Logos des Leerguts (z.B. zur Unterscheidung und/oder Identifizierung des Materials des Leerguts, wie z.B. von Kunststoff, wie Polyethylenterephthalat, und Glas), ein Sortieren mittels einer Leerguterkennung (z.B. Kastenerkennung), welche im Rücknahmeautomaten mittels dessen Steuerungstechnologie (auch als Farbfolgesteuerung bezeichnet) erfolgt, und/oder eine Ermittlung bzw. Unterscheidung gefüllter und nicht gefüllter Kisten zum Sortieren. Auf diese unterschiedlichen Vorgehensweisen kann der Typ des jeweiligen Leergutkastens beispielsweise ermittelt werden.

Gemäß verschiedenen Ausführungsformen kann eine Transportanordnung Folgendes aufweisen: eine Mehrebenen-Transportstrecke, welche eine erste Transportebene und eine (z.B. vertikal) darüber angeordnete zweite Transportebene aufweist; einen Zuführförderer zum Zuführen eines Behälters (z.B. von Leergut oder einer Leergutkiste) in Richtung der Mehrebenen-Transportstrecke; einen Verteilförderer zwischen dem Zuführförderer und der Mehrebenen-Transportstrecke, wobei der Verteilförderer an der Mehrebenen-Transportstrecke zwischen der ersten Transportebene und der zweiten Transportebene schwenkbar gelagert ist zum Verteilen des Behälters auf die erste Transportebene oder die zweite Transportebene; eine Sensoranordnung, welche eingerichtet ist, zumindest eine physische (d.h. körperliche) Eigenschaft (z.B. Gewicht, Füllzustand oder Material) des Behälters zu erfassen; eine Schwenksteuervorrichtung, welche eingerichtet ist, den Verteilförderer zwischen der ersten Transportebene und der zweiten Transportebene zu schwenken, wenn die zumindest eine Eigenschaft ein vorgegebenes Kriterium (auch als Verteilkriterium bezeichnet) erfüllt.

Die Eigenschaft kann beispielsweise eine extensive Eigenschaft (z.B. extensive Größe) aufweisen oder daraus gebildet sein, d.h. eine Eigenschaft, welche sich mit der Größe des Behälters ändert (wie beispielsweise Masse, Volumen und/oder Ausdehnung). Optional kann die Eigenschaft eine intensive Eigenschaft (z.B. intensive Größe) aufweisen, d.h. eine Eigenschaft, welche gegenüber der Größe des Behälters invariant ist (wie beispielsweise Farbeigenschaft, Form, Material, chemische Zusammensetzung und/oder Füllzustand).

Gemäß verschiedenen Ausführungsformen kann die Schwenksteuervorrichtung mehrere Betriebsmodi, gemäß denen das Schwenken 106s des Verteilförderers 106 erfolgt, bereitstellen, wobei die Schwenksteuervorrichtung zwischen den mehreren Betriebsmodi umschaltbar eingerichtet ist. Beispielsweise können sich die Betriebsmodi der mehreren Betriebsmodi (z.B. paarweise) voneinander unterscheiden in der Schwenkgeschwindigkeit, der Anzahl der Schwenkpositionen und/oder dem Kriterium.

Gemäß verschiedenen Ausführungsformen kann die Schwenksteuervorrichtung ein Bewegungsgetriebe aufweisen, welches eingerichtet ist, eine rotatorische Bewegung in eine das Schwenken des Verteilförderers bewirkende translatorische Bewegung umzuwandeln.

Gemäß verschiedenen Ausführungsformen kann das Bewegungsgetriebe einen Exzenter aufweisen. Dieser ermöglicht eine kompakte Bauweise und eine schnelle Schwenkbewegung, z.B. selbst bei hohem Behältergewicht. Die beispielsweise von dem Exzenter durchgeführte, z.B. sinusförmige, Bewegung kann auch auf andere Weise realisiert werden, beispielsweise mittels einer Servoachse und/oder einer Spindel und/oder einem Kniehebel-Mechanismus (wie unten näher erläutert) und/oder einem regelbaren Frequenzumrichter, der eine sinusförmige Bewegung erzeugt. Mit anderen Worten kann das Bewegungsgetriebe alternativ zu dem Exzenter eine Servoachse, eine Spindel, einen Kniehebel-Mechanismus und/oder einen regelbaren Frequenzumrichter aufweisen.

Erfindungsgemäss weist das Bewegungsgetriebe eine Spindel und/oder einen Kniehebel-Mechanismus auf. Die Spindel ermöglicht ein hohes Behältergewicht mittels des Verteilförderers zu bewegen. Der Kniehebel-Mechanismus ermöglicht eine schnelle Schwenkbewegung (anschaulich aufgrund eines größeren realisierbaren Hebels).

Gemäß verschiedenen Ausführungsformen kann die Schwenksteuervorrichtung ferner einen Elektroantrieb aufweisen, welcher eingerichtet ist, dem Bewegungsgetriebe die rotatorische Bewegung bereitzustellen.

Gemäß verschiedenen Ausführungsformen kann die Mehrebenen-Transportstrecke eine zusätzliche Transportebene aufweisen, welche an dem Verteilförderer auf Höhe der ersten oder zweiten Transportebene ist; wobei die Transportanordnung (z.B. der Verteilförderer) eine horizontal-Verteilvorrichtung aufweist, welche zum Verteilen (horizontal-Verteilen) zwischen der ersten bzw. zweiten Transportebene und der zusätzlichen Transportebene eingerichtet ist; und wobei die Schwenksteuervorrichtung eingerichtet ist, eine Transportrichtung der horizontal-Verteilvorrichtung umzuschalten zwischen zu der ersten bzw. zweiten Transportebene und zu der zusätzlichen Transportebene, wenn die zumindest eine Eigenschaft ein zusätzliches vorgegebenes Kriterium erfüllt.

Gemäß verschiedenen Ausführungsformen kann die zumindest eine Eigenschaft zumindest ein Gewicht (auch als Masse bezeichnet) und/oder eine Farbeigenschaft und/oder Kennzeichen (z.B. ein Logo) des Behälters repräsentieren, z.B. zum Ermitteln des Typs des jeweiligen Leergutbehälters, beispielsweise des Leergutkastens.

Gemäß verschiedenen Ausführungsformen kann die Sensoranordnung einen ersten Gewichtssensor und/oder einen zweiten Gewichtssensor aufweisen, wobei der erste Gewichtssensor zum Erfassen eines auf den Zuführförderer wirkenden Gewichtes (z.B. des Behälters) eingerichtet ist; und wobei der zweite Gewichtssensor zum Erfassen eines auf den Verteilförderer wirkenden Gewichtes (z.B. des Behälters) eingerichtet ist; wobei die zumindest eine Eigenschaft zumindest das mittels des ersten Gewichtssensors und/oder des zweiten Gewichtssensors erfasste Gewicht (z.B. des Behälters) repräsentiert.

Gemäß verschiedenen Ausführungsformen kann der erste Gewichtssensor in den Zuführförderer integriert sein. Alternativ oder zusätzlich kann der zweite Gewichtssensor in den Verteilförderer integriert sein.

Gemäß verschiedenen Ausführungsformen können der Zuführförderer und/oder der Verteilförderer ein Transportband aufweisen.

Gemäß verschiedenen Ausführungsformen können die erste Transportebene und/oder die zweite Transportebene einen Rollenförderer aufweisen, z.B. einen passiven Rollenförderer (d.h. nicht angetrieben). Es können die erste Transportebene und/oder die zweite Transportebene alternativ oder zusätzlich einen oder mehrere Gurtförderer (oder allgemeiner einen oder mehrere angetriebene Förderer) aufweisen.

Gemäß verschiedenen Ausführungsformen kann die Mehrebenen-Transportstrecke eine dritte Transportebene aufweisen, welche über oder unter dem Verteilförderer angeordnet ist; wobei der Zuführförderer einen zusätzlichen Verteilförderer aufweist, wobei der zusätzliche Verteilförderer zwischen dem Verteilförderer und der dritten Transportebene schwenkbar gelagert ist zum Verteilen des Zuführens auf die dritte Transportebene oder den Verteilförderer (oder die zweite Transportebene); wobei die Schwenksteuervorrichtung ferner eingerichtet ist, den zusätzlichen Verteilförderer zwischen der dritten Transportebene und dem Verteilförderer zu schwenken, wenn die zumindest eine Eigenschaft ein vorgegebenes noch zusätzliches Kriterium erfüllt.

Gemäß verschiedenen Ausführungsformend kann der Zuführförderer eingerichtet sein, den Behälter und zumindest einen diesem unmittelbar nachfolgenden zusätzlichen Behälter mit einer Transportgeschwindigkeit und einem Abstand voneinander zu transportieren; wobei die Schwenksteuervorrichtung eingerichtet ist, den Verteilförderer innerhalb einer Zeitspanne zwischen der ersten Transportebene und der zweiten Transportebene zu schwenken, wobei die Zeitspanne dem Quotienten aus dem Abstand und der Transportgeschwindigkeit entspricht.

Gemäß verschiedenen Ausführungsformen kann eine Leergutannahmeanordnung Folgendes aufweisen: einen Rücknahmeautomaten; und eine Transportanordnung gemäß verschiedenen Ausführungsformen zum Transportieren eines von dem Rücknahmeautomaten angenommen Behälters.

Ausführungsbeispiele der Erfindung sind in den Figuren dargestellt und werden im Folgenden näher erläutert.

Es zeigen
- Figur 1A und 1B: jeweils eine Transportanordnung gemäß verschiedenen Ausführungsformen in einer schematischen Querschnittsansicht oder Seitenansicht;
- Figur 2A: einen Förderer gemäß verschiedenen Ausführungsformen in einer schematischen Querschnittsansicht oder Seitenansicht;
- Figur 2B: eine Transportebene gemäß verschiedenen Ausführungsformen in einer schematischen Querschnittsansicht oder Seitenansicht;
- Figur 2C: eine Transportanordnung gemäß verschiedenen Ausführungsformen in einer schematischen Perspektivansicht;
- Figur 3A und 3B: eine Transportanordnung gemäß verschiedenen Ausführungsformen in einer schematischen Querschnittsansicht oder Seitenansicht;
- Figur 4A und 4B: jeweils eine Transportanordnung gemäß verschiedenen Ausführungsformen in einer schematischen Querschnittsansicht oder Seitenansicht;
- Figur 5A und 5B: jeweils eine Transportanordnung gemäß verschiedenen Ausführungsformen in einer schematischen Querschnittsansicht oder Seitenansicht;
- Figur 6: eine Transportanordnung gemäß verschiedenen Ausführungsformen in einer schematischen Querschnittsansicht oder Seitenansicht;
- Figur 7: eine Transportanordnung gemäß verschiedenen Ausführungsformen in verschiedenen Ansichten;
- Figur 8: eine Transportanordnung gemäß verschiedenen Ausführungsformen in einer schematischen Querschnittsansicht oder Seitenansicht;
- Figur 9 und 10: jeweils eine Transportanordnung gemäß verschiedenen Ausführungsformen in einer schematischen Querschnittsansicht oder Seitenansicht
- Figur 11 und 12: eine Transportanordnung gemäß verschiedenen Ausführungsformen in verschiedenen Ansichten;
- Figur 13: eine Transportanordnung gemäß verschiedenen Ausführungsformen in einer schematischen Querschnittsansicht oder Seitenansicht;
- Figur 14: eine Leergutannahmeanordnung gemäß verschiedenen Ausführungsformen in einer schematischen Querschnittsansicht oder Seitenansicht; und
- Figur 15: eine Transportanordnung gemäß verschiedenen Ausführungsformen in einer schematischen Querschnittsansicht oder Seitenansicht.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Gemäß verschiedenen Ausführungsformen kann der Begriff "gekoppelt" oder "Kopplung" im Sinne einer (z.B. mechanischen, hydrostatischen, thermischen und/oder elektrischen), z.B. direkten oder indirekten, Verbindung und/oder Wechselwirkung verstanden werden. Mehrere Elemente können beispielsweise entlang einer Wechselwirkungskette miteinander gekoppelt sein. Gemäß verschiedenen Ausführungsformen kann "gekuppelt" im Sinne einer mechanischen (z.B. körperlichen bzw. physikalischen) Kopplung verstanden werden, z.B. mittels eines direkten körperlichen Kontakts. Eine Kupplung kann eingerichtet sein, eine mechanische Wechselwirkung (z.B. Kraft, Drehmoment, etc.) zu übertragen.

Gemäß verschiedenen Ausführungsformen kann ein Transportsystem mehrere der hierin beschriebenen Transportanordnung (z.B. zum Selektieren) aufweisen, an welche sich das Transportsystem verzweigt. Das Transportsystem kann eine Sensoranordnung (z.B. einen oder mehrere Sensoren aufweisend) und eine Steueranordnung (z.B. eine oder mehrere Schwenksteuervorrichtungen aufweisend) aufweisen. Die Transportanordnungen und/oder deren Bestandteile (z.B. Verteilförderer und zugehörige Schwenksteuervorrichtung) können auf das gesamte Transportsystem verteilt sein und untereinander kommunizieren, z.B. mittels entsprechender Signale. Beispielsweise können mehrere Transportanordnungen die erfassten Eigenschaften des Behälters gemeinsam nutzen.

Beispielsweise können alle Bestandteile des Transportsystems untereinander kommunizieren oder diese können zu autarken Funktionseinheiten gruppiert sein bilden, welche nicht untereinander kommunizieren. In einer Leergutannahmeanordnung können beispielsweise ein erster Sensor und/oder eine erste Steuervorrichtung des Transportsystems Teil des Rücknahmeautomaten sein. Weitere Sensoren und/oder Steuervorrichtungen können an Stellen angeordnet sein, an denen das Leergut verteilt werden soll, d.h. sich das Transportsystem verzweigt.

Gemäß verschiedenen Ausführungsformen kann eine Selektieranordnung eingerichtet sein, das Leergut zu kategorisieren, d.h. diesem eine Kategorie zuzuweisen. Die Kategorie jedes Leerguts (bzw. Behälters) kann optional (z.B. zentral) gespeichert werden, und das Verteilen des Leerguts gemäß dessen Kategorie erfolgen (auch als Sortieren bezeichnet). Beispielsweise kann Leergut einer vordefinierten Kategorie (z.B. das Kriterium erfüllend) aus einem Leergut-Strom, welcher mittels der Transportanordnung geführt wird, herausgeteilt und mittels des Verteilförderers auf die erste Transportebene oder die darüber angeordnete zweite Transportebene verteilt werden.

Das Kategorisieren kann im Allgemeinen anhand verschiedener Eigenschaften des Leerguts erfolgen, z.B. dessen Farbeigenschaft (welche beispielsweise dessen optisches Spektrum und/oder Farbvalenz, z.B. anschaulich dessen Farbe, repräsentiert) und/oder Logo, dessen Form, dessen Füllzustand, dessen Größe, dessen Material (bzw. chemische Zusammensetzung), dessen Behältertyp, dessen Rückführungstyp (z.B. Einweg oder Mehrweg) und/oder dessen Gewicht. Die Sensoranordnung kann eingerichtet sein, die zum Kategorisieren benötigten Eigenschaften des Leerguts (z.B. des Aufbewahrungsbehälters und/oder des Leergutbehälters) zu erfassen.

Das Leergut (oder mit anderen Worten ein oder mehrere Behälter) kann in dem Zusammenhang als entleerte Verkaufsverpackung und/oder Verkaufsbehälter verstanden werden, wie etwa Einwegflaschen, Einwegpfandflaschen, Getränkedosen, Mehrwegflaschen und Ähnliches, oder Leergut-Aufbewahrungsbehälter, wie etwa eine Getränkekiste. Das Leergut kann auch ein Gebinde aufweisen, d.h. eine verbundene Einheit mit mehreren Behältern, z.B. einen Aufbewahrungsbehälter (z.B. eine Leergut-Kiste) in welchem optional kleinere Behälter (z.B. Flaschen) oder anderes Leergut angeordnet sein können.

Wenn ein Füllegrad (auch als Füllzustand bezeichnet) eines Aufbewahrungsbehälters, z.B. einer Leergut-Kiste, das Kriterium erfüllt, beispielsweise geringer ist als ein (z.B. einstellbarer) Schwellenwert, beispielsweise geringer als 70%, dann kann die Kiste aus dem Leergutstrom herausgebracht werden (anschaulich ausgeschleust), z.B. indem der Verteilförderer in eine entsprechende Position gebracht wird und/oder mittels einer Weiche, zum "manuellen" Ergänzen des Leergutbehälters mit zusätzlichem Leergut (beispielsweise zum manuellen Auffüllen eines Leergutkastens mit Flaschen).

Der Füllegrad kann verstanden werden als Anteil des Aufbewahrungsbehälters, der mit Leergut belegt ist, z.B. als Anzahl der mit Leergut belegten Leergutplätze des Aufbewahrungsbehälters.

Die Leergutrücknahmeanlage kann beispielsweise Teil einer Leergut-Rückführungskette sein, welche das Leergut beispielsweise einer Wiederverwendung oder einer Verwertung (z.B. zur Rohstoff-Rückgewinnung) zuführt.

Gemäß verschiedenen Ausführungsformen kann der Verteilförderer (beispielsweise anschaulich ein schwenkbarer Gurtförderer) an beliebiger Stelle eines Leergutkastentransports, z.B. ca. 2 bis 4 Meter hinter dem Leergutautomaten angeordnet sein oder werden, und kann im Materialfluss (Leergut-Strom) in mehrere (z.B. 2 oder 3) verschiedene Transportebenen (z.B. Stauebenen) sortieren.

Beispielsweise kann eine reine Staufunktion bereitgestellt sein oder werden. Wahlweise kann die Auswahl einer Kisten-Stauebene erfolgen, die so lange mit Kisten vollgefahren wird bis die Stauebene voll ist. In dem Fall kann die Stauebene einen Sensor aufweisen, welcher einen Füllzustand der Stauebene erfasst, wobei das Schwenken erfolgen kann, wenn der Füllzustand der Stauebene ein vorgegebenes Kriterium erfüllt. Beispielsweise erfolgt der Wechsel in eine nächste Stauebene, wenn der Füllzustand der Stauebene das vorgegebene Kriterium erfüllt.

Gemäß verschiedenen Ausführungsformen kann der Verteilförderer (z.B. mittels des Exzenterhubgetriebes) bis zu 750 Schwenkbewegungen (anschaulich Transportebenen-Wechsel) oder mehr pro Stunde erreichen, d.h. es kann das Verteilen von mindestens > 450 Stück Leergut (z.B. Leergutkästen) pro Stunde erfolgen, z.B. kann von dem Zuführförderer störungsfrei in mindestens 2 Transportebenen (z.B. Stauebenen) sortiert werden, z.B. von mindestens 1000 Stück Leergut pro Stunde, z.B. von mindestens 1500 Stück Leergut pro Stunde.

Gemäß verschiedenen Ausführungsformen kann der Verteilförderer (z.B. ein schwenkbarer Gurtförderer mit Exzenterhub) aufgrund seiner Geschwindigkeit beim schnellen Ebenenwechsel zum Sortieren von Leergut (z.B. Leergutkisten) in der Lage sein, innerhalb einer Lücke (beispielsweise 50 cm zwischen zwei Leergutkisten) des Leergutstroms (anschaulich Materialfluss) die Ebenen zu wechseln (was beispielsweise einen "stop&go" Transport, d.h. diskontinuierlichen Transport, vermeiden lässt).

Gemäß verschiedenen Ausführungsformen kann ein Sortierverfahren über Lichtschranken und/oder Höhenabfrage des Leerguts (z.B. der Leergutkästen) bereitgestellt sein oder werden. Beispielsweise kann schweres Leergut (z.B. Kästen) in eine obere Stauebene verteilt werden. Mittels der zumindest einen physischen Eigenschaft, z.B. dem Gewicht, kann die Genauigkeit des Verteilens erhöht werden. Beispielsweise kann man anhand von nur der Höhe des Leerguts nicht ohne Weiteres auf dessen Gewicht schließen (beispielsweise kann die Trefferquote ca. 30%-40% oder weniger).

Gemäß verschiedenen Ausführungsformen wird zumindest eines von Folgendem bereitgestellt: sauber/gut vorselektiertes Leergut (z.B. Leergutkästen); schneller/einfacher pallettierbares Leergut; verbesserte Arbeitsplatzergonomie; schweres Leergut (z.B. Kästen) kommen nach einer Vorgabe in die obere Transportebene, bessere Handhabung von schweren Leergut (z.B. Kästen), Gewicht-Kriterium (z.B. > x Kg) kann eingestellt werden, Verringerung des Krankenstandes, händische Verlagerung des Leerguts (z.B. Leergutkästen) kann weniger den Rücken der Mitarbeiter belasten, und/oder variable Reaktion auf veränderte Gesundheitsvorgaben. Alternativ oder zusätzlich kann der Betriebsmodus, gemäß dem das Verteilen mittels des Verteilförderers erfolgt, ein- und/oder umgestellt werden. Beispielsweise kann eine Einstellbarkeit eines Verteilkriteriums oder mehrerer Verteilkriterien bereitgestellt sein oder werden (anschaulich könnten kleinere Menschen möglicherweise lieber die schweren Kästen von der unteren Transportebene herausnehmen).

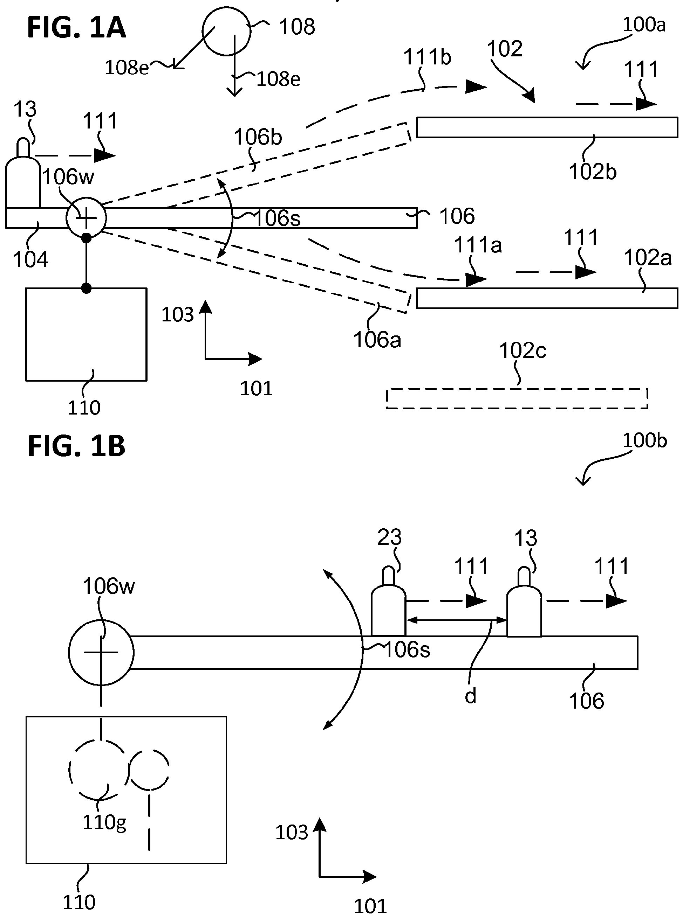

**Fig.1A** veranschaulicht eine Transportanordnung 100a gemäß verschiedenen Ausführungsformen in einer schematischen Querschnittsansicht oder Seitenansicht (z.B. quer zur Transportrichtung 111).

Die Transportanordnung 100a kann zum Transportieren eines Behälters 13 (z.B. von Einzel-Leergut oder einer Leergutkiste) in eine Transportrichtung 111 eingerichtet sein entlang eines Transportpfades, welcher mittels des Verteilförderers 106 definiert wird. Der Verteilförderer 106 kann zwischen dem Zuführförderer 104 und der Mehrebenen-Transportstrecke 102 angeordnet sein.

Der Zuführförderer 104 kann zum Transportieren des Behälters 13 in die Transportrichtung 111 zu der Mehrebenen-Transportstrecke 102 und dem Verteilförderer 106 hin eingerichtet sein.

Beispielsweise kann der Zuführförderer 104 (z.B. ein Vorband 104 aufweisend oder daraus gebildet) eine zumindest abschnittsweise horizontale Transportfläche (beispielsweise mittels eines Obertrums bereitgestellt) aufweisen, was den Transport über größere Strecken erleichtert. Alternativ oder zusätzlich kann der Zuführförderer 104 eine zumindest abschnittsweise geneigte (d.h. nicht horizontale) Transportfläche (beispielsweise mittels eines Obertrums bereitgestellt) aufweisen, z.B. in Richtung des Verteilförderers 106 ansteigend und/oder an den Verteilförderer 106 angrenzend bzw. diesem zumindest nahe. Damit kann ein Übergang vom Zuführförderer 104 zum Verteilförderer 106 gleichmäßiger sein, d.h. der maximale Unterschied zwischen den Transportrichtungen des Zuführförderers 104 und des Verteilförderers 106 kann verringert werden. Dies vereinfacht den Transport, beispielsweise großer und/oder schwerer Behälter 13, und/oder verringert Belastungen auf die jeweiligen Förderer 104, 106. Beispielsweise kann ein Winkel zwischen der Transportfläche des Zuführförderers 104 und der Horizontalen kleiner als ein Winkel, um welchen der Verteilförderer 106 schwenkbar 106s ist, und/oder in einem Bereich von ungefähr 2° bis ungefähr 15° sein, z.B. in einem Bereich von ungefähr 5° bis ungefähr 10°, z.B. ungefähr 7°.

Die Mehrebenen-Transportstrecke 102 kann eine erste Transportebene 102a und eine darüber angeordnete zweite Transportebene 102b aufweisen. Die erste Transportebene 102a und/oder zweite Transportebene 102b können beispielsweise als Stauebene eingerichtet sein.

Eine Stauebene kann einen Aufnahmeraum bereitstellen, in dem mehrere Behälter 13 gesammelt werden. Mittels der Stauebene kann beispielsweise ein Transportpuffer bereitgestellt sein oder werden und/oder kann die Transportbewegung der Behälter verlangsamt (oder gestoppt) werden, was deren Entnahme von Hand erleichtert. Beispielsweise kann die Stauebene das Ende eines Transportpfades bilden.

Beispielsweise können die erste Transportebene 102a und/oder zweite Transportebene 102b (z.B. eine Rollenbahn aufweisend oder daraus gebildet) eine zumindest abschnittsweise horizontale Transportfläche (beispielsweise mittels mehrerer Transportrollen bereitgestellt) aufweisen, was den Transport über größere Strecken erleichtert. Alternativ oder zusätzlich können die erste Transportebene 102a und/oder zweite Transportebene 102b eine zumindest abschnittsweise geneigte Transportfläche (beispielsweise mittels mehrerer Transportrollen bereitgestellt) aufweisen, z.B. in Richtung des Verteilförderers 106 ansteigend (anschaulich ein Gefälle in Transportrichtung bereitstellend) und/oder an den Verteilförderer 106 angrenzend oder zumindest diesem nahe. Mittels des Gefälles kann dem Behälter 13 eine Hangabtriebskraft (z.B. in Transportrichtung) bereitgestellt sein oder werden, welche den Transport des Behälters 13 erleichtert. Dies vereinfacht den Transport, beispielsweise großer und/oder schwerer Behälter 13, und/oder ermöglicht die erste Transportebene 102a und/oder zweite Transportebene 102b antriebslos auszubilden. Beispielsweise kann ein Winkel zwischen der Transportfläche (der ersten Transportebene 102a und/oder zweiten Transportebene 102b) und der Horizontalen kleiner als ein Winkel, um welchen der Verteilförderer 106 schwenkbar 106s ist, und/oder in einem Bereich von ungefähr 0,5° bis ungefähr 5° sein, z.B. in einem Bereich von ungefähr 2° bis ungefähr 3°.

Alternativ oder zusätzlich zu der abschnittsweise geneigten Transportfläche (z.B. der ersten Transportebene 102a und/oder zweiten Transportebene 102b) kann der entsprechende Abschnitt der Transportfläche, z.B. an den Verteilförderer 106 angrenzend oder diesem zumindest nahe, auch angetrieben sein (z.B. mittels eines Gurtförderers, auch als Zwischen-Gurtförderer bezeichnet, bereitgestellt), d.h. der Abschnitt der ersten Transportebene 102a bzw. zweiten Transportebene 102b kann mit einem Antrieb gekuppelt sein. Dies erleichtert den Übergang vom Verteilförderer 106 zur ersten Transportebene 102a bzw. zweiten Transportebene 102b. Beispielsweise kann damit begünstigt werden (z.B. zur Sicherstellung), dass ein Weitertransport der Kästen zwischen dem Verteilförderer 106 (auch als Schwenkelement bezeichnet) und einem in Transportrichtung nachfolgenden, z.B. nicht angetriebenen, Abschnitt der ersten Transportebene 102a bzw. zweiten Transportebene 102b zuverlässig erfolgt.

Der Verteilförderer 106 kann in eine erste Position 106a (auch als erste Schwenkpositionen 106a bezeichnet, anschaulich eine untere Position) und eine zweite Position 106b (auch als zweite Schwenkpositionen 106b bezeichnet, anschaulich eine obere Position) schwenkbar 106s gelagert sein, d.h. mittels einer Schwenkbewegung 106s zwischen der ersten Position 106a und der zweiten Position 106b (Allgemeiner: zwischen mehreren Positionen 106a, 106b) verlagert werden, z.B. aus der ersten Position 106a in die zweite Position 106b oder andersherum.

Beispielsweise kann zwischen den zwei einander benachbarten Positionen der mehreren Positionen 106a, 106b ein Winkel (auch als Schwenkwinkel bezeichnet) eingeschlossen sein in einem Bereich von ungefähr 10° bis ungefähr 20°, z.B. ungefähr 16°. Optional kann der Schwenkwinkel die Horizontale überstreichen, beispielsweise kann die Horizontale parallel zur Winkelhalbierenden des Schwenkwinkels sein.

Der Verteilförderer 106 kann eine Schwenkachse 106w aufweisen, um welche herum die Schwenkbewegung 106s erfolgt. Die Schwenkachse 106w kann näher an dem Zuführförderer 104 als an der Mehrebenen-Transportstrecke 102 angeordnet sein.

Optional können die Eigenschaften der Schwenkbewegung 106s ein- und/oder umstellbar eingerichtet sein. Beispielsweise können mehrere Schwenkbewegung-Modi (auch als Betriebsmodi bezeichnet) des Verteilförderers 106 bereitgestellt sein oder werden, gemäß denen das Schwenken 106s erfolgt.

Beispielsweise kann eine Geschwindigkeit (auch als Schwenkgeschwindigkeit bezeichnet, z.B. als Positionswechsel (auch als Transportebenen-Wechsel bezeichnet) pro Zeit angegeben oder als mittlere Winkelgeschwindigkeit angegeben) der Schwenkbewegung 106s ein- und/oder umstellbar, beispielsweise zwischen zumindest zwei verschiedenen Geschwindigkeiten, eingerichtet sein. Beispielsweise können sich zumindest einige der mehreren Betriebsmodi, gemäß denen das Schwenken 106s erfolgt, in zumindest der Schwenkgeschwindigkeit unterscheiden.

Beispielsweise kann die Transportanordnung 100a (z.B. deren der Zuführförderer 104) eingerichtet sein, den Behälter 13 und zumindest einen diesem unmittelbar nachfolgenden zusätzlichen Behälter 23 (vergleiche auch Fig.1B), z.B. kontinuierlich, mit einer Transportgeschwindigkeit v und einem Abstand d (anschaulich eine Lücke) voneinander zu transportieren. Der Behälter 13 und der zumindest einen diesem unmittelbar nachfolgende zusätzliche Behälter 23 können Teil eines Behälterstroms (auch als Leergutstrom bezeichnet) sein, welcher eine Vielzahl von Behältern 13, 23 aufweist. Der oder jeder Behälter des Behälterstroms 13, 23 kann beispielsweise den Abstand von den ihm jeweils benachbarten zusätzlichen Behälter(n) des Behälterstroms aufweisen, zwischen denen der Behälter beispielsweise angeordnet ist.

Aus der Transportgeschwindigkeit v und dem Abstand d der Behälter 13, 23 voneinander ergibt sich eine Zeitspanne t, zwischen den Behältern 13, 23, in denen ein Positionswechsel, z.B. ein Wechsel (auch als Transportebenen-Wechsel bezeichnet) zwischen den mehreren Positionen 106a, 106b, z.B. zwischen der ersten Position 106a und der zweiten Position 106b, erfolgen kann, ohne den kontinuierlichen Transport unterbrechen zu müssen. Anschaulich kann das Schwenken zwischen den mehreren Positionen erfolgen und/oder abgeschlossen werden zwischen zwei aufeinanderfolgenden Behältern 13, 23. Die Zeitspanne t kann der Quotient aus dem Abstand d und der Transportgeschwindigkeit v sein.

Die Transportgeschwindigkeit v und der Abstand d können der Schwenksteuervorrichtung 110 beispielsweise vorgegeben sein oder werden, z.B. wenn diese sich beispielsweise aus einer Einstellung der Transportanordnung 100a ergeben und/oder beispielsweise verstellbar sind. Alternativ oder zusätzlich können die Transportgeschwindigkeit v und/oder der Abstand d von der Schwenksteuervorrichtung 110 vorgegeben sein, z.B. auf Grundlage einer vordefinierten Zeitspanne t, oder von dieser ermittelt werden.

Beispielsweise kann die Schwenksteuervorrichtung 110 eingerichtet sein, den Verteilförderer 106 innerhalb einer Zeitspanne t zwischen den mehreren Transportebenen 102a, 102b, z.B. der ersten Transportebene 102a und der zweiten 102b Transportebene, zu schwenken. Mit anderen Worten kann die Dauer des Schwenkens 106s bzw. der Schwenkbewegung 106s (auch als Schwenkintervall bezeichnet) kleiner sein als der Quotient aus dem Abstand d und der Transportgeschwindigkeit v.

Beispielsweise kann der Abstand d in einem Bereich von ungefähr 20 cm (Zentimeter) bis ungefähr 1 m (Meter) sein, z.B. in einem Bereich von ungefähr 30 cm bis ungefähr 60 cm, z.B. ungefähr 50 cm. Alternativ oder zusätzlich kann die Transportgeschwindigkeit v in einem Bereich von ungefähr 0,01 m/s bis ungefähr 1 m/s sein, z.B. größer als oder gleich zu 0,02 m/s, z.B. in einem Bereich von ungefähr 0,02 m/s bis ungefähr 0,5 m/s, z.B. größer als oder gleich zu 0,05 m/s, z.B. in einem Bereich von ungefähr 0,05 m/s bis ungefähr 0,2 m/s.

Beispielsweise können die Zeitspanne t und/oder das Schwenkintervall kleiner sein als ungefähr 10 s (Sekunden), z.B. kleiner als ungefähr 7,5 s, z.B. kleiner als ungefähr 5 s, z.B. kleiner als ungefähr 4 s, z.B. kleiner als ungefähr 3 s, z.B. kleiner als ungefähr 2 s. Alternativ oder zusätzlich kann die Anzahl von Wechseln zwischen zwei Positionen der mehreren Positionen 102a, 102b (auch als Transportebenen-Wechsel bezeichnet) und/oder von Schwenkbewegungen größer sein als ungefähr 350 pro Stunde (entspricht ungefähr 0,1/s), z.B. größer als ungefähr 500 pro Stunde (entspricht ungefähr 0,14/s), z.B. größer als ungefähr 750 pro Stunde (entspricht ungefähr 0,2/s), z.B. größer als ungefähr 1000 pro Stunde (entspricht ungefähr 0,28/s), z.B. größer als ungefähr 1500 pro Stunde (entspricht ungefähr 0,41/s), z.B. größer als ungefähr 1800 pro Stunde (entspricht ungefähr 0,5/s).

Mittels der Schwenkbewegung 106s kann der Behälter 13 auf die erste Transportebene 102a oder die zweite Transportebene 102b verteilt werden. Der Verteilförderer 106 kann eingerichtet sein, in der ersten Position 106a einen ersten Transportpfad 111a zu der ersten (z.B. unteren) Transportebene 102a hin bzw. mit dieser zusammen bereitzustellen und in der zweiten Position 106b einen zweiten Transportpfad 111b zu der zweiten Transportebene 102b hin bzw. mit dieser zusammen bereitzustellen.

Die Sensoranordnung 108 kann eingerichtet sein, zumindest eine (d.h. genau eine oder mehr als eine) physische Eigenschaft des Behälters 13 zu erfassen 108e, z.B. dessen Gewicht, dessen Farbeigenschaft, dessen Füllzustand, dessen Größe, dessen Material, dessen Form und/oder ein (wenn vorhanden) darauf angeordnetes Kennzeichen (z.B. Logo), z.B. ein auf dem Behälter 13 (z.B. einem Kasten) aufgebrachtes Logo. Im Allgemeinen kann die Farbeigenschaft die spektrale Zusammensetzung des von dem Behälters 13 ausgehenden (z.B. durch diesen hindurch gelangenden und/oder von diesem abgegebenen) Lichts repräsentieren, z.B. dessen Farbvalenz, dessen Transmissionsspektrum und/oder dessen Reemissionsspektrum, z.B. von dem Kennzeichen verursacht. Die Farbeigenschaft kann beispielsweise den Anteil der Licht-Wellenlängen an der spektralen Zusammensetzung und/oder einen Punkt im Farbraum angeben. Es können allerdings auch andere Arten zur Charakterisierung der Farbeigenschaft verwendet werden.

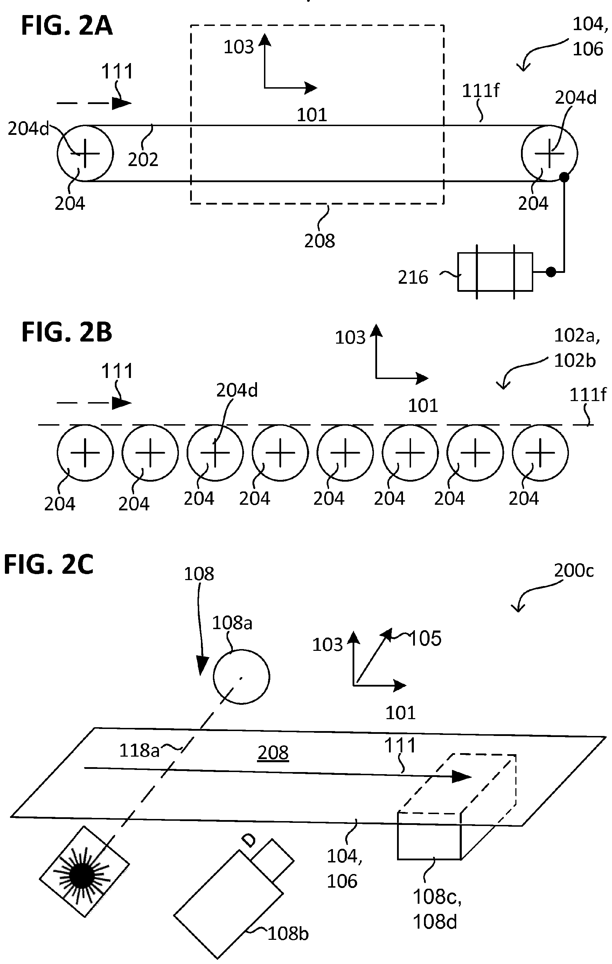

Die Sensoranordnung 108 kann beispielsweise zumindest einen Sensorbereich 208 aufweisen (vergleiche auch Fig.2A), d.h. einen Bereich 208, in welchem die Sensoranordnung 108 eingerichtet ist, die physische Eigenschaft zu erfassen 108e. Beispielsweise kann ein erster Sensorbereich der Sensoranordnung 108 derart angeordnet sein, dass ein auf dem Zuführförderer 104 angeordneter Behälter 13 mittels der Sensoranordnung 108 erfasst werden kann. Alternativ oder zusätzlich kann ein zweiter Sensorbereich der Sensoranordnung 108 derart angeordnet sein, dass ein auf dem Verteilförderer 106 angeordneter Behälter 13 mittels der Sensoranordnung 108 erfasst werden kann.

Anhand der zumindest einen physischen Eigenschaft kann beispielsweise auf eine logistische Eigenschaft, wie beispielsweise den Behältertyp und/oder den Rückführungstyp, des Behälters 13 geschlossen werden. Im Allgemeinen können mehrere Eigenschaften (z.B. zumindest eine physische und/oder zumindest eine logistische Eigenschaft) des Behälters einander (z.B. bidirektional) repräsentieren. Mit anderen Worten kann anhand genau einer oder mehr als einer ersten (z.B. physischen) Eigenschaft des Behälters 13 auf genau eine oder mehr als eine zweite (z.B. physische und/oder logistische) Eigenschaft des Behälters geschlossen werden und andersherum.

Beispielsweise können sich eine physische und eine logistische Eigenschaft gegenseitig repräsentieren, wie beispielsweise der Behältertyp und zumindest eines aus der folgenden Gruppe physischer Eigenschaften des Behälters 13 bestehend aus: Farbeigenschaft, Größe, Leergewicht, Form und/oder Material. Alternativ oder zusätzlich können zwei physische Eigenschaften einander repräsentieren, wie beispielsweise das Material und die Farbeigenschaft oder auch beispielsweise das Material und das Gewicht. Ebenso können gemischte Eigenschaften des Behälters einander repräsentieren, beispielsweise kann das Gewicht in Verbindung mit dem Behältertyp zusammen den Füllzustand repräsentieren und andersherum. Das erfasste Gewicht des Behälters kann beispielsweise von dessen Leergewicht abweichen und somit Rückschluss auf dessen Füllzustand ermöglichen.

Gemäß verschiedenen Ausführungsformen kann der Verteilförderer 106 in der ersten Position 106a und/oder in der zweiten Position 106b eine schräge (d.h. im Winkel zur Horizontalen) Transportrichtung bzw. Transportebene bereitstellen. Alternativ kann der Verteilförderer 106 in der ersten Position 106a oder in der zweiten Position 106b eine horizontale Transportrichtung bzw. Transportebene bereitstellen.

Optional kann die Sensoranordnung 108 eingerichtet sein, die Transportgeschwindigkeit v und/oder den Abstand d zu erfassen. Alternativ können die Transportgeschwindigkeit v und/oder der Abstand d globale Parameter der Transportanordnung 100a sein, welche der Schwenksteuervorrichtung 110 vorgegeben werden. Beispielsweise kann die Schwenksteuervorrichtung 110 eingerichtet sein, die Zeitspanne t basierend auf der Transportgeschwindigkeit v und/oder dem Abstand d zu ermitteln.

Optional kann die Sensoranordnung 108 eingerichtet sein, die Anwesenheit des Behälters 13 auf dem jeweiligen Förderer 104, 106 mittels der Sensoranordnung 108 zu erfassen und darauf basierend, z.B. unter Verwendung der Transportgeschwindigkeit v, einen Zeitpunkt zu ermitteln, in dem ein Behälter 13, 23 den Verteilförderer 106 in Richtung der Mehrebenen-Transportstrecke 102 verlässt.

Die Schwenksteuervorrichtung 110 kann beispielsweise eingerichtet sein, die Schwenkbewegung 106s innerhalb der Zeitspanne t durchzuführen (d.h. zu beenden) und/oder zu dem Zeitpunkt zu beginnen, in dem ein Behälter den Verteilförderer 106 in Richtung der Mehrebenen-Transportstrecke 102 verlässt. Somit kann das Schwenken erfolgen, ohne den Transport unterbrechen zu müssen, d.h. ohne einen diskontinuierlichen Transport zu benötigen. Mit anderen Worten kann der Transport des Behälters 13 kontinuierlich erfolgen während das Schwenken 106s erfolgt.

Die Schwenksteuervorrichtung 110 kann eingerichtet sein, den Verteilförderer 106 zwischen der ersten Position 106a und der zweiten Position 106b zu schwenken 106s, z.B. gemäß dem eingestellten Betriebsmodus. Die Schwenkbewegung 106s, d.h. der Wechsel (auch als Transportebenen-Wechsel bezeichnet) zwischen der ersten Position 106a und der zweiten Position 106b, kann beispielsweise erfolgen, wenn die zumindest eine Eigenschaft des Behälters 13 ein vorgegebenes Kriterium erfüllt. Das Kriterium kann beispielsweise zumindest einen (d.h. genau oder mehr als einen) Schwellenwert für die zumindest eine Eigenschaft definieren, bei dessen Überschreitung oder Unterschreitung durch die Eigenschaft das Kriterium erfüllt ist. Beispielsweise kann der zumindest eine Schwellenwert zumindest einen Bereich (auch als vorgegebener Bereich bezeichnet) nach oben und/oder nach unten begrenzen (z.B. der Bereich zwischen zwei Schwellenwerten liegend), so dass das Kriterium erfüllt ist, wenn die Eigenschaft in dem vorgegebenen Bereich liegt.

Anschaulich kann ein Klassifizieren des Behälters 13 anhand der zumindest einen physischen Eigenschaft des Behälters 13, erfolgen, z.B. in "zur zweiten Transportebene 102b zu transportieren" (z.B. wenn das Kriterium erfüllt ist) und "zur ersten Transportebene 102a zu transportieren" (z.B. wenn das Kriterium unerfüllt ist), oder andersherum.

Alternativ oder zusätzlich zu der Schwenkgeschwindigkeit können sich zumindest einige der mehreren Betriebsmodi, gemäß denen das Schwenken 106s erfolgt, in zumindest dem Kriterium unterscheiden.

Beispielsweise kann die Schwenkbewegung 106s erfolgen, wenn die zumindest eine Eigenschaft einen Schwellenwert des zumindest einen Schwellenwerts unterschreitet (oder überschreitet) und/oder innerhalb (oder außerhalb) eines Bereichs des zumindest einen vorgegebenen Bereichs liegt. Das Kriterium kann beispielsweise mehrere Schwellenwerte definieren, von denen einige überschritten und/oder einige unterschritten werden müssen, um dem Kriterium zu genügen.

Das Kriterium kann beispielsweise einen Gewicht-Schwellenwert definieren. Die Schwenksteuervorrichtung 110 kann derart eingerichtet sein, dass ein Behälter 13, dessen Gewicht den Gewicht-Schwellenwert überschreitet und/oder außerhalb eines vorgegebenen Gewicht-Bereich liegt, in der zweiten Position 106b bzw. zur zweiten Transportebene 102b transportiert wird. Dies kann es beispielsweise erleichtern, den Behälter weiter zu transportieren, insbesondere, wenn dieser von Hand von der zweiten Transportebene 102b entnommen wird. Beispielsweise können mittels des Kriteriums Gesundheitsvorgaben berücksichtigt werden. Wahlweise kann die Schwenksteuervorrichtung 110 auch derart eingerichtet sein, dass der Behälter 13, dessen Gewicht den Gewicht-Schwellenwert überschreitet oder außerhalb eines vorgegebenen Gewicht-Bereichs liegt, auch in der ersten Position 106a bzw. zur ersten Transportebene 102a transportiert wird, wenn erforderlich.

Alternativ oder zusätzlich kann ein Behälter 13, dessen Füllzustand einen Füllzustand-Schwellenwert überschreitet oder außerhalb eines vorgegebenen Füllzustand-Bereichs liegt entweder zur ersten Transportebene 102a oder zur zweiten Transportebene 102b transportiert werden. Beispielsweise kann als ausreichend gefülltes, z.B. als "voll" kategorisiertes, Leergut zu einer unteren Transportebene 102a und unzureichend gefülltes, z.B. als "leer" kategorisiertes, Leergut zu einer obenliegenden Transportebene 102b transportiert werden (was das Auffüllen des unzureichend gefüllten Leerguts erleichtert) oder andersherum (was wiederum das händische Verlagern des vollen und damit schweren Leerguts erleichtert.

Alternativ oder zusätzlich kann ein Behälter 13, dessen Größe (zum Beispiel Höhe und/oder Breite) einen Größe-Schwellenwert überschreitet oder außerhalb eines vorgegebenen Größe-Bereichs liegt entweder zur ersten Transportebene 102a oder zur zweiten Transportebene 102b transportiert werden.

Alternativ oder zusätzlich kann ein Behälter 13, dessen Anteil an einem Material (z.B. eines Materialtyps, wie Metall, Glas und/oder Kunststoff) einen Material-Schwellenwert überschreitet oder außerhalb eines vorgegebenen Material-Bereichs liegt entweder zur ersten Transportebene 102a oder zur zweiten Transportebene 102b transportiert werden.

In analoger Weise kann ein Behälter 13 anhand seiner Farbeigenschaft und/oder seiner Form entweder zur ersten Transportebene 102a oder zur zweiten Transportebene 102b transportiert werden.

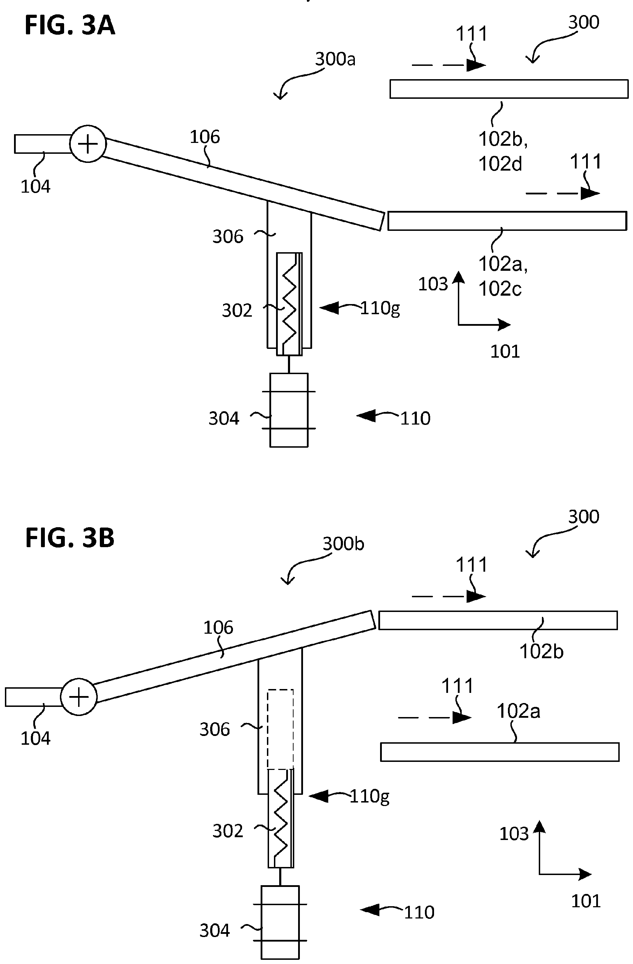

Optional kann die Mehrebenen-Transportstrecke zumindest eine zusätzliche Transportebene aufweisen, z.B. eine zusätzliche zweite Transportebene, wie später genauer beschrieben wird, sowie optional eine dritte Transportebene 102c und/oder (d.h. alternativ oder zusätzlich) eine zusätzliche dritte Transportebene 102d (vergleiche auch Fig.3).

Die dritte Transportebene 102c kann beispielsweise unter der ersten Transportebene 102a angeordnet sein. Die zusätzliche dritte Transportebene 102d kann über der zweiten Transportebene angeordnet sein.

Die Schwenksteuervorrichtung 110 kann eingerichtet sein, den Verteilförderer 106 in eine dritte Position (auch als dritte Schwenkposition bezeichnet) zu schwenken, in welcher der Verteilförderer 106 einen dritten Transportpfad zu der dritten Transportebene 102c bzw. mit dieser zusammen bereitstellt. Alternativ oder zusätzlich kann die Schwenksteuervorrichtung 110 eingerichtet sein, den Verteilförderer 106 in eine zusätzliche dritte Position (auch als dritte Schwenkposition bezeichnet) zu schwenken, in welcher der Verteilförderer 106 einen zusätzlichen dritten Transportpfad zu der zusätzlichen dritten Transportebene 102d bzw. mit dieser zusammen bereitstellt.

Beispielsweise kann, wenn die Transportanordnung 100a (z.B. betriebsbereit) aufgestellt ist (z.B. auf einem Untergrund), die erste Transportebene 102a bzw. die optionale dritte Transportebene 102c in Gravitationsrichtung unter der zweiten Transportebene 102b angeordnet sein. Mit andere Worten können die erste Transportebene 102a bzw. die optionale dritte Transportebene 102c zwischen der zweiten Transportebene 102b und dem Untergrund angeordnet sein. In dem Fall kann die Schwenkbewegung 106s um eine im Wesentlichen horizontale Schwenkachse 106w erfolgen.

**Fig.1B** veranschaulicht eine Transportanordnung 100b gemäß verschiedenen Ausführungsformen in einer schematischen Querschnittsansicht oder Seitenansicht (z.B. quer zur Transportrichtung 111). Die Transportanordnung 100b kann eingerichtet sein, wie die Transportanordnung 100a.

Gemäß verschiedenen Ausführungsformen kann die Schwenksteuervorrichtung 110 ein Bewegungsgetriebe 110g (auch als Hubgetriebe 110g, z.B. im weitesten Sinn, also auch einschließend beispielsweise einen Kniehebel-Mechanismus oder andere entsprechend eingerichtete Getriebe, bezeichnet) aufweisen, mittels dessen eine rotatorische Bewegung in eine die Schwenkbewegung 106s des Verteilförderers 106 bewirkende translatorische Bewegung (anschaulich der Hub) umgewandelt werden kann (auch als mechanischer Wandler 110g bezeichnet). Mit anderen Worten kann das Bewegungsgetriebe 110g eingerichtet sein, ein diesem eingegebenes Drehmoment in eine die Schwenkbewegung 106s des Verteilförderers 106 bewirkende translatorische Kraft umzuwandeln. Die translatorische Kraft bzw. Bewegung kann eine schnellere Schwenkbewegung 106s ermöglichen.

**Fig.2A** veranschaulicht einen Förderer 104, 106, z.B. den Zuführförderer 104 und/oder den Verteilförderer 106, gemäß verschiedenen Ausführungsformen in einer schematischen Querschnittsansicht oder Seitenansicht (z.B. quer zur Transportrichtung 111).

Der Förderer 104, 106 (d.h. der Zuführförderer 104 und/oder Verteilförderer 106) kann einen angetriebenen (auch als aktiv bezeichnet) Gurtförderer (auch als Bandförderer bezeichnet) und/oder Kettenförderer aufweisen oder daraus gebildet sein. Der Bandförderer kann beispielsweise ein Transportband 202 (auch als Fördergurt bezeichnet), z.B. einen Gurt, ein Kettenband oder Ähnliches, aufweisen, auf welchem der Behälter 13 transportiert wird. Der Kettenförderer kann beispielsweise einen oder mehrere Kettenstränge 202 (z.B. mittels Antriebskettenräder gelagert) aufweisen, auf welchem der Behälter 13 transportiert wird.

Das Transportband kann mittels mehrerer Transportrollen 204 (auch als Tragrollen bezeichnet) abgestützt werden, von denen zumindest eine Transportrolle 204 mit einem Antrieb gekuppelt sein oder werden kann. Alternativ oder zusätzlich kann der Förderer 104, 106 einen angetriebenen Rollenförderer (vergleiche auch Fig.2B) aufweisen, welcher eine Vielzahl von Transportrollen 204 aufweist. Zum Antreiben des Förderers 104, 106 kann dieser einen Fördererantrieb 216 aufweisen, welcher mit der oder jeder angetriebenen Transportrolle 204 des Förderers 104, 106 gekuppelt ist.

Die mehreren Transportrollen 204 bzw. das Transportband 202 (z.B. dessen Obertrum) können eine Transportfläche 111f bereitstellen, auf welcher der Behälter 13 (d.h. das Leergut 13) transportiert wird in die Transportrichtung 111. Es können alternativ oder zusätzlich noch andere aktive Förderertypen verwendet werden, welche geeignet zum Transport des Behälters 13 sind.

Jede Transportrolle der mehreren Transportrollen 204 kann mittels eines Drehlagers eine Drehachse herum drehbar gelagert sein. Die mehreren Transportrollen 204 können beispielsweise eine Mantelfläche aufweisen, auf welcher das Transportband bzw. der Behälter 13 aufliegt.

**Fig.2B** veranschaulicht eine Transportebene 102a, 102b, z.B. die erste Transportebene 102a und/oder die zweite Transportebene 102b, gemäß verschiedenen Ausführungsformen in einer schematischen Querschnittsansicht oder Seitenansicht (z.B. quer zur Transportrichtung 111).

Die Transportebene 102a, 102b (d.h. die erste Transportebene 102a und/oder die zweite Transportebene 102b) kann einen unangetriebenen (auch als passiven bezeichnet) Rollenförderer aufweisen, welcher eine Vielzahl von Transportrollen 204 aufweist. Die mehreren Transportrollen 204 können eine Transportfläche 111f bereitstellen, auf welcher der Behälter 13 (d.h. das Leergut 13) transportiert wird in die Transportrichtung 111. Es können alternativ oder zusätzlich noch andere passive Förderertypen verwendet werden, welche geeignet zum passiven Transport des Behälters 13 sind.

Beispielsweise kann die Transportfläche 111f der Transportebene 102a, 102b schräg sein (d.h. einen Winkel zur Horizontalen aufweisen, auch als Neigungswinkel bezeichnet), z.B. von dem Verteilförderer 106 weg abwärts geneigt. Damit kann dem Behälter 13 eine Hangabtriebskraft bereitgestellt sein oder werden. Mittels der Hangabtriebskraft kann erreicht werden, dass der auf der Transportebene 102a, 102b aufliegende Behälter 13 von selbst (d.h. passiv) transportiert wird. Damit lässt sich auf einen Antrieb verzichten, was Kosten spart.

**Fig.2C** veranschaulicht eine Transportanordnung 200c gemäß verschiedenen Ausführungsformen in einer schematischen Perspektivansicht (z.B. quer zur Transportrichtung 111).

Die Sensoranordnung 108 kann beispielsweise zumindest einen optischen Sensor 108a, 108b aufweisen, z.B. eine Lichtschranke 108a und/oder eine Kamera 108b. Die Lichtschranke 108a kann beispielsweise einen Lichtstrahl 118a erzeugen, welcher durch den (z.B. ersten und/oder zweiten) Sensorbereich 208 hindurch gerichtet ist. Die Kamera 108b kann beispielsweise mit ihrem Objektiv auf den (z.B. ersten und/oder zweiten) Sensorbereich 208 gerichtet sein.

Mittels des optischen Sensors 108a, 108b (z.B. der Lichtschranke 108a und/oder der Kamera 108b) kann beispielsweise die Anwesenheit eines Behälters 13 und/oder dessen Größe (z.B. Höhe und/oder Breite) erfasst werden. Beispielsweise kann der Lichtstrahl 118a unterbrochen werden, wenn ein Behälter 13 den Sensorbereich 208 passiert und/oder den Größe-Schwellenwert überschreitet.

Alternativ oder zusätzlich kann der zumindest eine optische Sensor 108a, 108b (z.B. der Lichtschranke 108a und/oder der Kamera 108b) zur Transmissionsmessung eingerichtet sein, d.h. zum Erfassen der durch den Behälter 13 hindurchgelangenden elektromagnetischen Strahlung, zum Beispiel deren optisches Spektrum oder zumindest er Anteil zumindest eines vorgegebenen Wellenlängenbereichs. Beispielsweise kann mittels des zumindest einen optischen Sensors 108a, 108b eine Spektralanalyse des Behälters 13 oder eine Farbanalyse erfolgen.

Im Fall der Lichtschranke 108a kann beispielsweise die Transmission des Lichtstrahls 118a der Lichtschranke 108a durch den Behälter 13 hindurch erfasst werden. Im Fall der Kamera 108b kann beispielsweise eine zusätzliche Lichtquelle benötigt werden, mittels welcher der Behälter 13 in Richtung der Kamera 108b durchstrahlt werden kann. Mittels der Transmissionsmessung kann beispielsweise die Farbeigenschaft des Behälters 13, z.B. der Anteil (auch als Transmissionsgrad bezeichnet) und/oder das Spektrum des hindurchgelangen Lichts erfasst werden.

Optional kann anhand des Transmissionsgrads auf den Füllzustand und/oder das Material des Behälters 13 geschlossen werden. Anschaulich kann ein sich in dem Behälter 13 befindendes Fluid und/oder ein opakes Material den Transmissionsgrad verringern.

Die Kamera 108b kann ferner das Erfassen weitere Eigenschaften des Behälters 13 ermöglichen. Beispielsweise kann mittels der Kamera 108b das Reemissionsspektrum des Behälters 13 erfasst werden. Dazu kann optional eine externe Lichtquelle verwendet werden, mittels welcher der Behälter 13 aus Richtung der Kamera 108b angestrahlt werden kann. Alternativ oder zusätzlich kann mittels der Kamera eine logistische Eigenschaft des Behälters 13 erfasst werden, zum Beispiel dessen Behältertyp und/oder dessen Rückführungstyp. Beispielsweise kann die logistische Eigenschaft mittels Auslesens eines Strichcodes des Behälters 13 und/oder mittels einer Mustererkennung anhand des Behälters 13 erfasst werden.

Alternativ oder zusätzlich zu dem Erfassen der Farbeigenschaft des Behälters 13 (z.B. dessen Farbvalenz) mittels des zumindest einen optischen Sensors 108a, 108b kann die Farbeigenschaft des Behälters 13 bereits am Rücknahmeautomaten (z.B. einem Leergutautomaten) erfasst werden. In dem Fall können Daten, welche die Farbeigenschaft des Behälters 13 repräsentieren, beispielsweise zentral mittels eines Auswertungsschaltkreises verarbeitet werden (auch als Farbfolgesteuerung bezeichnet). Das Ergebnis des Verarbeitens der Daten kann beispielsweise der Schwenksteuervorrichtung 110 bereitgestellt werden.

Die Sensoranordnung 108 kann alternativ oder zusätzlich zu dem zumindest einen optischen Sensor 108a, 108b zumindest einen Gewichtssensor 108c, 108d (z.B. zumindest eine Waage 108c, 108d) aufweisen, z.B. einen ersten Gewichtssensor 108c (z.B. eine erste Waage 108c) und/oder einen zweiten Gewichtssensor 108d (z.B. eine zweite Waage 108f). Gemäß verschiedenen Ausführungsformen kann die Sensoranordnung 108 zumindest einen Gewichtssensor 108c, 108d aufweisen, welcher eingerichtet ist, ein Gewicht eines auf dem Zuführförderer 104 oder dem Verteilförderer 106 angeordneten Behälters 13 (zumindest einen das Gewicht repräsentierende Eigenschaft des Behälters 13) zu erfassen.

**Fig.3A** und **Fig.3B** veranschaulichen eine Transportanordnung 300 gemäß verschiedenen Ausführungsformen in einer schematischen Querschnittsansicht oder Seitenansicht in mehreren Verteilkonfigurationen 300a, 300b. Die Transportanordnung 300 kann eingerichtet sein, wie eine der vorangehend beschriebenen Transportanordnungen, z.B. die Transportanordnung 100a oder 100b. In einer ersten Verteilkonfigurationen 300a kann der Verteilförderer 106 in der ersten Schwenkposition oder der dritten Schwenkposition sein. In einer zweiten Verteilkonfigurationen 300b kann der Verteilförderer 106 in der zweiten Schwenkposition oder der zusätzlichen dritten Schwenkposition sein.

Die Schwenksteuervorrichtung 110 kann ein Spindelhubgetriebe 110g aufweisen oder daraus gebildet sein. Das Spindelhubgetriebe 110g kann eine Spindel 302 und einen Hubarm 306 aufweisen, welche ineinandergreifen. Die Spindel 302 kann mit einem elektrischen Antrieb 304 der Schwenksteuervorrichtung 110 gekuppelt sein. Der Hubarm 306 kann mit dem Verteilförderer 106 gekuppelt sein.

Mittels des Antriebs 304 kann dem Spindelgetriebe 110g die rotatorische Bewegung bereitgestellt sein oder werden. Mittels des Hubarms 306 kann die translatorische Bewegung auf den Verteilförderer 106 übertragen werden.

Der Antrieb 304 kann beispielsweise einen oder mehrere elektrische Motoren aufweisen, z.B. Servomotoren (z.B. mit einem Sensor zur Positionsbestimmung). Mit anderen Worten kann der Antrieb 304 einen Servoantrieb aufweisen oder daraus gebildet sein. Der oder jeder elektrische Motor kann beispielsweise ein Gleichstrommotor, einen Asynchronmotor oder einen Synchronmotor aufweisen oder daraus gebildet sein. Es können allerdings auch andere Typen elektrischer Motoren verwendet werden.

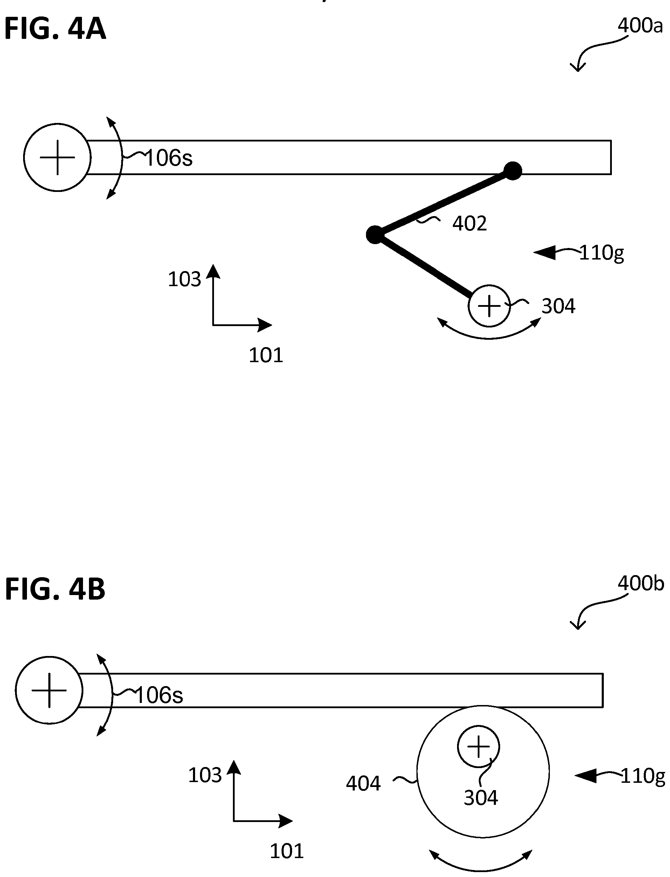

**Fig.4A** und **Fig.4B** veranschaulichen eine Transportanordnung 400a, 400b gemäß verschiedenen Ausführungsformen in einer schematischen Querschnittsansicht oder Seitenansicht (z.B. quer zur Transportrichtung 111). Die Transportanordnung 400a, 400b kann eingerichtet sein, wie die Transportanordnung 300, mit dem Unterschied, dass die Schwenksteuervorrichtung 110 der Transportanordnung 400a ein Kniehebelhubgetriebe 110g aufweist und die Schwenksteuervorrichtung 110 der Transportanordnung 400b ein Exzenterhubgetriebe 110g aufweist.

Das Kniehebelhubgetriebe 110g kann einen Kniehebel-Mechanismus 402 aufweisen, welcher den Antrieb 304 mit dem Verteilförderer 106 kuppelt.

Das Exzenterhubgetriebe 110g kann eine Exzenter 404 aufweisen, welcher den Antrieb 304 mit dem Verteilförderer 106 kuppelt. Der Exzenter 404 kann eine auf einer Welle (in der Ansicht verdeckt, welche mit dem Antrieb 304 gekuppelt ist) gelagerte Steuerungsscheibe aufweisen, deren Mittelpunkt (z.B. Schwerpunkt) außerhalb der Wellenachse liegt. Der Umfang der Steuerungsscheibe kann, aber muss nicht notwendigerweise, kreisrund sein.

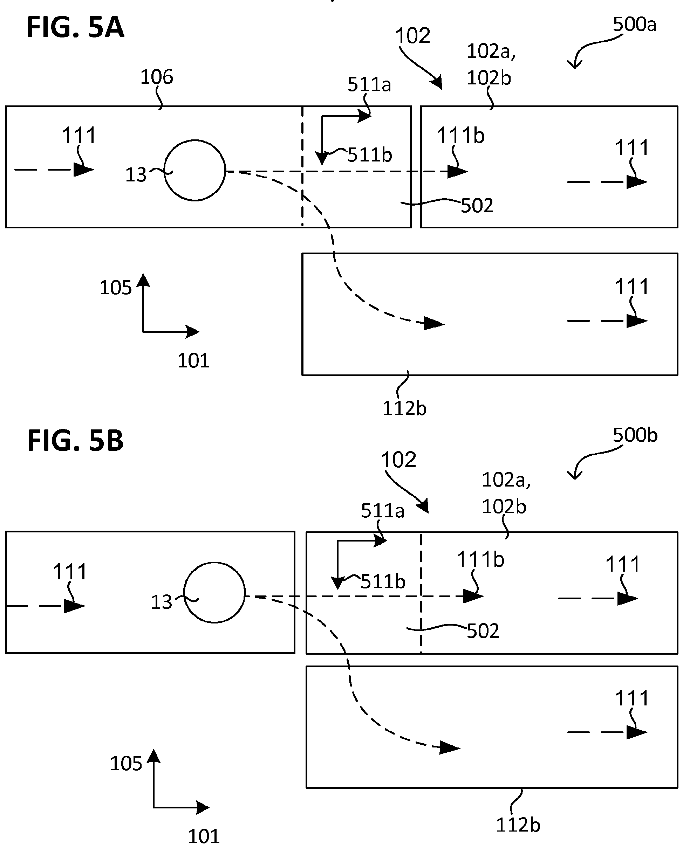

**Fig.5A** und **Fig.5B** veranschaulichen jeweils eine Transportanordnung 500a, 500b gemäß verschiedenen Ausführungsformen in einer schematischen Draufsicht (z.B. mit Blickrichtung auf die Transportfläche 111f). Die Transportanordnung 500a, 500b kann eingerichtet sein, wie eine der vorangehend veranschaulichten Transportanordnungen, z.B. Transportanordnung 100a, 100b, 200c, 300, 400a oder 400b.

Gemäß verschiedenen Ausführungsformen kann die Mehrebenen-Transportstrecke 102 eine zusätzliche zweite Transportebene 112b aufweisen. Die zusätzliche zweite Transportebene 112b kann an dem Verteilförderer 106 auf Höhe der zweiten Transportebene 102b oder auf Höhe der ersten Transportebene 102a angeordnet sein (im Folgenden vereinfacht als primäre Transportebene 102a, 102b bezeichnet). Optional können sich die zusätzliche zweite Transportebene 112b (auch als sekundäre Transportebene 112a bezeichnet) und die primäre Transportebene 102a, 102b in ihrem Neigungswinkel unterscheiden.

Ferner kann die Transportanordnung 500a, 500b eine horizontal-Verteilvorrichtung 502 (allgemeiner auch als Weiche 502 bezeichnet, z.B. horizontal-Weiche 502) aufweisen. Die horizontal-Verteilvorrichtung 502 kann eingerichtet sein, in einem ersten Modus eine erste Transportrichtung 511a zu der primären Transportebene 102a, 102b bereitzustellen und in einem zweiten Modus eine zweite Transportrichtung 511b zu der sekundären Transportebene 112b bereitzustellen. Die erste Transportrichtung 511b und die zweite Transportrichtung 511b können sich voneinander unterscheiden (d.h. einen Winkel einschließen) und/oder horizontal (d.h. quer zur Vertikalen) sein.

Die horizontal-Verteilvorrichtung 502 der Transportanordnung 500a kann in dem Verteilförderer 106 integriert und/oder zumindest an diesem befestigt sein. Die horizontal-Verteilvorrichtung 502 der Transportanordnung 500a kann alternativ in die Mehrebenen-Transportstrecke 102 integriert und/oder zumindest an dieser befestigt sein, z.B. an der primären Transportebene 102a, 102b (z.B. einen angetriebenen Abschnitt bereitstellen).

Die Schwenksteuervorrichtung (nicht dargestellt) kann eingerichtet sein, die horizontal-Verteilvorrichtung zwischen dem ersten Modus und dem zweiten Modus umzuschalten, wenn die zumindest eine Eigenschaft ein zusätzliches vorgegebenes Kriterium erfüllt. Mit anderen Worten kann das Umschalten der horizontal-Verteilvorrichtung 502, d.h. der Wechsel zwischen dem ersten Modus und dem zweiten Modus, beispielsweise erfolgen, wenn die zumindest eine Eigenschaft das zusätzliche vorgegebene Kriterium erfüllt. Das zusätzliche vorgegebene Kriterium kann beispielsweise zumindest einen (d.h. genau oder mehr als einen) zusätzlichen Schwellenwert für die zumindest eine Eigenschaft definieren, bei dessen Überschreitung oder Unterschreitung durch die Eigenschaft das Kriterium erfüllt ist. Beispielsweise kann der zumindest eine zusätzliche Schwellenwert zumindest einen zusätzlichen Bereich (auch als vorgegebener zusätzlicher Bereich bezeichnet) nach oben und/oder nach unten begrenzen (z.B. der Bereich zwischen zwei zusätzlichen Schwellenwerten liegend), so dass das Kriterium erfüllt ist, wenn die Eigenschaft in dem vorgegebenen zusätzlichen Bereich liegt.

Beispielsweise kann das Umschalten der horizontal-Verteilvorrichtung 502 erfolgen, wenn die zumindest eine Eigenschaft einen Schwellenwert des zumindest einen zusätzlichen Schwellenwert unterschreitet (oder unterschreiten) und/oder innerhalb (oder außerhalb) eines Bereichs des zumindest einen vorgegebenen zusätzlichen Bereichs liegt. Das zusätzliche Kriterium kann beispielsweise mehrere zusätzliche Schwellenwerte definieren, von denen einige überschritten und/oder einige unterschritten werden müssen, um dem zusätzlichen Kriterium zu genügen.

Analog zum vorstehend beschriebenen Kriterium kann der Behälter 13 anhand seiner Größe, seines Materials, seines Füllzustands, seines Gewichts, seiner Farbeigenschaft und/oder seiner Form entweder zur sekundären Transportebene 112b oder zur primären Transportebene 102a, 102b transportiert werden.

Alternativ oder zusätzlich kann die zumindest eine Eigenschaft zumindest einen Typ des Behälters repräsentieren.

Alternativ oder zusätzlich zu der angetriebenen Weiche 502, welche in die Mehrebenen-Transportstrecke 102 integriert und/oder zumindest an dieser befestigt ist, kann die Mehrebenen-Transportstrecke 102 einen angetriebenen Transportabschnitt 502 (z.B. mittels eines Gurtförderers bereitgestellt) aufweisen, welcher an dem 106 Verteilförderer angeordnet ist (und beispielsweise nur eine Transportrichtung bereitstellt).

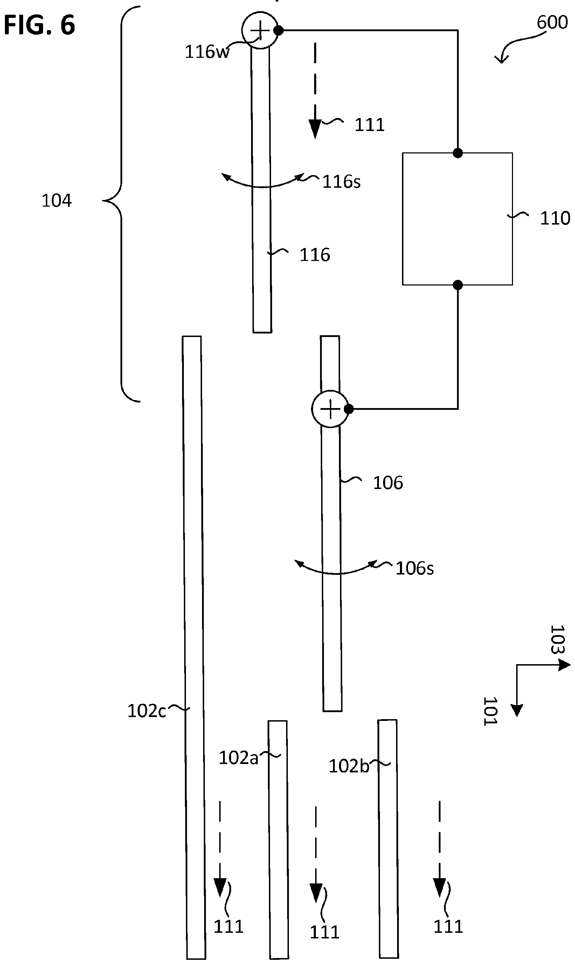

**Fig.6** veranschaulicht eine Transportanordnung 600 gemäß verschiedenen Ausführungsformen in einer schematischen Querschnittsansicht oder Seitenansicht. Die Transportanordnung 600 kann eingerichtet sein, wie eine der vorangehend veranschaulichten Transportanordnungen, z.B. Transportanordnung 100a, 100b, 200c, 300, 400a oder 400b.

Die Transportanordnung 600 kann die dritte Transportebene 102c aufweisen.

Im Unterschied zu Transportanordnung 100 kann die dritte Transportebene 102c, wie dargestellt, beispielsweise unter dem Verteilförderer 106 angeordnet sein oder alternativ über dem Verteilförderer 106 angeordnet sein (nicht dargestellt, in dem Fall als zusätzliche dritte Transportebene 102d bezeichnet).

Der Zuführförderer 104 kann einen zusätzlichen Verteilförderer 116 aufweisen. Der zusätzliche Verteilförderer 116 kann eingerichtet sein, wie einer der vorangehend beschriebenen Verteilförderer 106.

Der zusätzliche Verteilförderer 116 kann in eine erste Position (anschaulich eine untere Position) und eine zweite Position (anschaulich eine obere Position) schwenkbar 116s gelagert sein, d.h. mittels einer Schwenkbewegung 116s zwischen seiner ersten Position und zweiten Position verlagert werden, z.B. aus seiner ersten Position in die zweite Position oder andersherum. Der zusätzliche Verteilförderer 116 kann eine Schwenkachse 116w aufweisen, um welcher herum die Schwenkbewegung 116s erfolgt.

Mittel der Schwenkbewegung 116s kann der Behälter 13 auf den Verteilförderer 106 oder die dritte Transportebene 102c verteilt werden. Der zusätzliche Verteilförderer 116 kann eingerichtet sein, in der ersten Position einen ersten Transportpfad zu dem Verteilförderer 106 oder mit diesem gemeinsam bereitzustellen und in der zweiten Position einen zweiten Transportpfad zu der dritten Transportebene 102c oder mit dieser gemeinsam bereitzustellen.

Die Schwenksteuervorrichtung 110 kann eingerichtet sein, den zusätzlichen Verteilförderer 116 zwischen seiner ersten Position und seiner zweiten Position zu schwenken. Die Schwenkbewegung 116s, d.h. der Wechsel zwischen der ersten Position und der zweiten Position kann beispielsweise erfolgen, wenn die zumindest eine Eigenschaft ein zusätzliches vorgegebenes Kriterium erfüllt. Das zusätzliche Kriterium kann beispielsweise zumindest einen (d.h. genau oder mehr als einen) zusätzlichen Schwellenwert für die zumindest eine Eigenschaft definieren, bei dessen Überschreitung oder Unterschreitung durch die Eigenschaft das Kriterium erfüllt ist. Beispielsweise kann der zumindest eine zusätzliche Schwellenwert zumindest einen zusätzlichen Bereich (auch als vorgegebener zusätzlicher Bereich bezeichnet) nach oben und/oder nach unten begrenzen (z.B. der Bereich zwischen zwei zusätzlichen Schwellenwerten liegend), so dass das Kriterium erfüllt ist, wenn die Eigenschaft in dem vorgegebenen zusätzlichen Bereich liegt.

Analog zum vorstehend beschriebenen Kriterium kann der Behälter 13 anhand seiner Größe, seines Materials, seines Füllzustands, seines Gewichts, seiner Farbeigenschaft und/oder seiner Form entweder zur dritten Transportebene 102c oder zum Verteilförderer 106 transportiert werden.

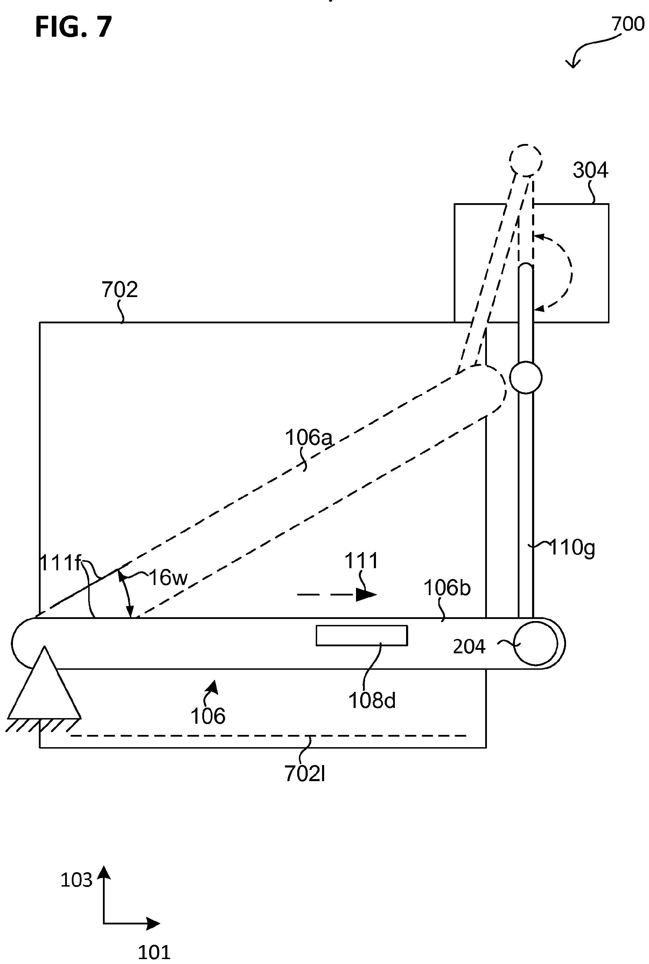

**Fig.7** veranschaulicht eine Transportanordnung 700 gemäß verschiedenen Ausführungsformen in einer schematischen Perspektivansicht. Die Transportanordnung 700 kann eingerichtet sein, wie eine der vorangehend veranschaulichten Transportanordnungen, z.B. Transportanordnung 100a, 100b, 200c, 300, 400a oder 400b, mit dem Unterschied, dass der Antrieb 304 und/oder das Bewegungsgetriebe 110g über dem Verteilförderer 106 angeordnet ist.

Das Bewegungsgetriebe 110g, kann wie dargestellt, einen Kniehebel-Mechanismus aufweisen oder alternativ die Spindel oder den Exzenter, wie vorstehend beschrieben ist.

Ferner kann die Transportanordnung 700 ein Gestell 702 aufweisen, welches den Verteilförderer 106 und optional den Antrieb 304 und/oder das Bewegungsgetriebe 110g trägt. Das Gestell kann optional zumindest einen Kabelschacht 7021 aufweisen, mittels dessen der Antrieb 304 und/oder die Sensoranordnung 108 mit einem Steuerschaltkreis der Schwenksteuervorrichtung 110 elektrisch verbunden ist.

Gemäß verschiedenen Ausführungsformen kann eine Breite 801 (d.h. Ausdehnung quer zur Transportrichtung 111 und parallel zur Transportfläche) des Verteilförderers 106 in einem Bereich von ungefähr 1 m (Meter) bis ungefähr 3 m sein, z.B. in einem Bereich von ungefähr 1,5 m bis ungefähr 2,2 m, z.B. ungefähr 1,7 m.

Der obenliegende Exzenter-Antrieb 304, 110g der Transportanordnung 700 (oder ein anderer Bewegungsgetriebe-Antrieb 304, 110g gemäß verschiedenen Ausführungsformen, der obenliegend angeordnet ist) erleichtert anschaulich den Service durch eine verbesserte Erreichbarkeit der Komponenten durch den Servicebearbeiter. Allerdings kann der Exzenter-Antrieb 304, 110g (oder ein anderer Bewegungsgetriebe-Antrieb 304, 110g gemäß verschiedenen Ausführungsformen) auch anders angeordnet sein oder werden, z.B. untenliegend, und/oder es kann auch ein obenliegender Kniehebel-Mechanismus-Antrieb 304, 110g verwendet werden.

Beispielsweise kann die Transportfläche 111f des Verteilförderers 106 zwischen einander benachbarten Positionen der mehreren Positionen 106a, 106b um einen Winkel 16w (auch als Schwenkwinkel 16w bezeichnet) geschwenkt sein oder werden in einem Bereich von ungefähr 10° bis ungefähr 20°, z.B. ungefähr 16°.

Optional kann der Verteilförderer 106 zumindest einen Gewichtssensor 108d (z.B. eine Waage aufweisend oder daraus gebildet) aufweisen. Beispielsweise kann der zumindest eine Gewichtssensor 108d zwischen dem Obertrum und dem Untertrum des Verteilförderers 106 angeordnet sein.

Optional kann zumindest die Transportfläche 111f (parallel zum Schenkel des Schwenkwinkels 16w) in einer Position 106b der mehreren Positionen 106a, 106b parallel zur Horizontalen sein. Ist die Transportfläche 111f parallel zur Horizontalen (z.B. in der Position 106b), kann das Erfassen des Gewichts eines mittels des Verteilförderers 106 transportierten Behälters erleichtert sein, da in diesem Fall die Normalkraft der Gewichtskraft entspricht, d.h. die Abhängigkeit der Normalkraft von dem Schwenkwinkel 16w nicht berücksichtigt werden muss. Damit kann das Gewicht des Behälter 13 beispielsweise in einer Position der mehreren Positionen 106a, 106b direkt erfasst werden.

Alternativ kann das Erfassen des Gewichts aufweisen, die Abhängigkeit der Normalkraft von dem Schwenkwinkel 16w zu berücksichtigen. Damit kann das Gewicht in jeder Ausrichtung der Transportfläche 111, z.B. wenn die Transportfläche 111f schräg zur Horizontalen ist und/oder wenn der Verteilförderer 106 außerhalb der mehreren Positionen ist, erfasst werden.

Gemäß verschiedenen Ausführungsformen kann eine Länge (d.h. Ausdehnung entlang der Transportrichtung 111) des Verteilförderers 106 in einem Bereich von ungefähr 1,5 m (Meter) bis ungefähr 3 m sein, z.B. in einem Bereich von ungefähr 1,5 m bis ungefähr 2,5 m, z.B. ungefähr 2,2 m.

Gemäß verschiedenen Ausführungsformen kann das Gestell 702 derart eingerichtet sein, dass ein Abstand des Verteilförderers 106 von einem Untergrund (auch bezeichnet als Einlaufhöhe) in einem Bereich von ungefähr 0,5 m (Meter) bis ungefähr 1 m ist, z.B. ungefähr 0,8 m.

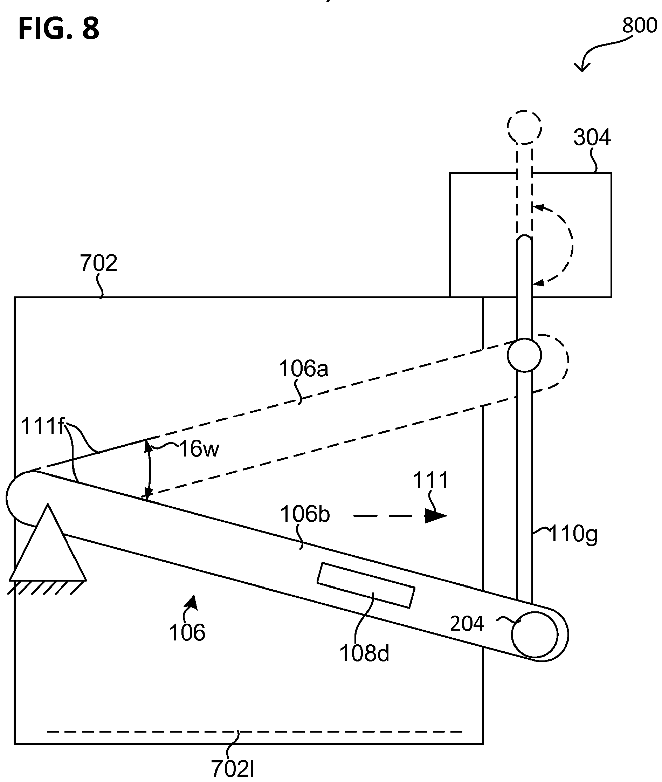

**Fig.8** veranschaulicht eine Transportanordnung 800 (z.B. die Transportanordnung 700 und/oder die Transportanordnung 1000) gemäß verschiedenen Ausführungsformen in einer schematischen Querschnittsansicht oder Seitenansicht (z.B. quer zur Transportrichtung 111).

Beispielsweise kann die Transportfläche 111f des Verteilförderers 106 zwischen einander benachbarten Positionen der mehreren Positionen 106a, 106b um einen Winkel 16w (auch als Schwenkwinkel 16w bezeichnet) geschwenkt sein oder werden in einem Bereich von ungefähr 10° bis ungefähr 20°, z.B. ungefähr 16°. Optional kann der Schwenkwinkel die Horizontale einschließen. Beispielsweise kann die Horizontale parallel zur Winkelhalbierenden des Schwenkwinkels sein.

Der obenliegende Exzenter-Antrieb 304, 110g der Transportanordnung 800 (oder ein anderer Bewegungsgetriebe-Antrieb 304, 110g, der obenliegend angeordnet ist) erleichtert anschaulich den Service durch eine verbesserte Erreichbarkeit der einzelnen Komponenten durch den Servicebearbeiter. Allerdings kann der Exzenter-Antrieb 304, 110g (oder ein anderer Bewegungsgetriebe-Antrieb 304, 110g gemäß verschiedenen Ausführungsformen) auch anders angeordnet sein oder werden, z.B. untenliegend, und/oder es kann auch ein obenliegender Kniehebel-Mechanismus-Antrieb 304, 110g verwendet werden.

Optional kann der Verteilförderer 106 zumindest einen Gewichtssensor 108d (z.B. eine Waage aufweisend oder daraus gebildet) aufweisen. Beispielsweise kann der zumindest eine Gewichtssensor 108d zwischen dem Obertrum und dem Untertrum des Verteilförderers 106 angeordnet sein.

Beispielsweise kann das Erfassen des Gewichts aufweisen, die Abhängigkeit der Normalkraft von dem Schwenkwinkel 16w zu berücksichtigen. Damit kann das Gewicht für jede Position der mehreren Positionen erfasst werden, d.h. wenn der Verteilförderer 106 in irgendeiner Position der mehreren Positionen ist. Mit anderen Worten kann, wenn die Transportfläche 111f schräg zur Horizontalen ist, das Erfassen des Gewichts aufweisen, die Abhängigkeit der Normalkraft von dem Schwenkwinkel 16w zu berücksichtigen. Alternativ kann die Transportfläche 111f zum Erfassen des Gewichts in die Horizontale gebracht sein oder werden, z.B. wenn der Verteilförderer 106 außerhalb der mehreren Positionen ist.

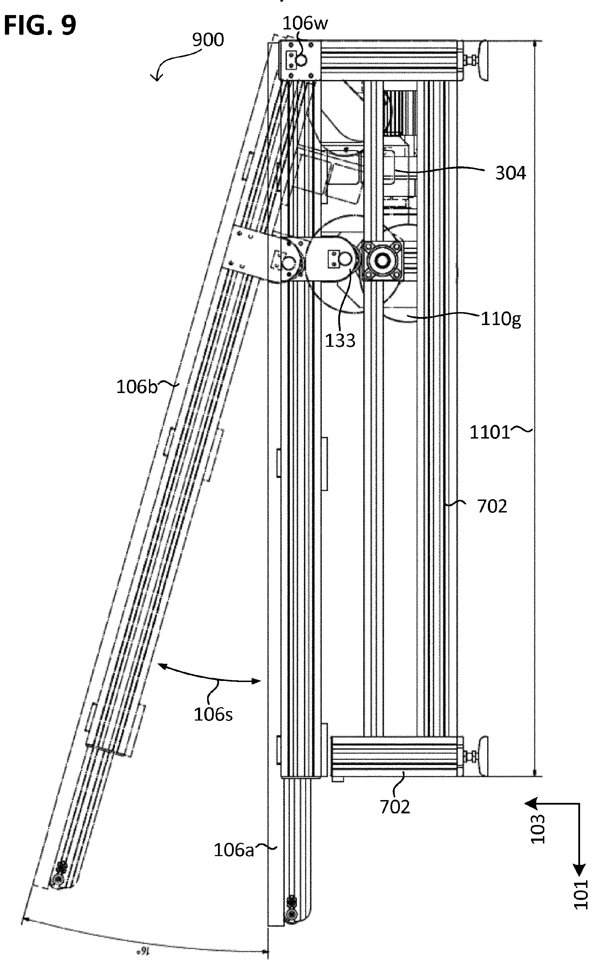

**Fig.9** veranschaulicht eine Transportanordnung 900 gemäß verschiedenen Ausführungsformen in einer schematischen Querschnittsansicht oder Seitenansicht (z.B. quer zur Transportrichtung 111). Die Transportanordnung 900 kann eingerichtet sein, wie einer der zuvor beschriebenen Transportanordnungen, wobei der Verteilförderer 106 über das Gestell 702 hervorstehen kann. Alternativ oder zusätzlich können der Antrieb 304 und/oder das Bewegungsgetriebe 110g unter dem Verteilförderer 106 angeordnet sein oder werden. Damit kann dieser kompakt ausgeführt werden.

Gemäß verschiedenen Ausführungsformen kann das Bewegungsgetriebe 110g eine drehbar gelagerte Rolle 133 aufweisen, welche mit dem Verteilförderer 106 gekuppelt ist und auf dem Exzenter aufliegt. Die drehbar gelagerte Rolle 133 kann eingerichtet sein auf dem Exzenter abzurollen. Damit kann die Reibung reduziert werden und demzufolge ein schnelleres Schwenken 106s erfolgen.

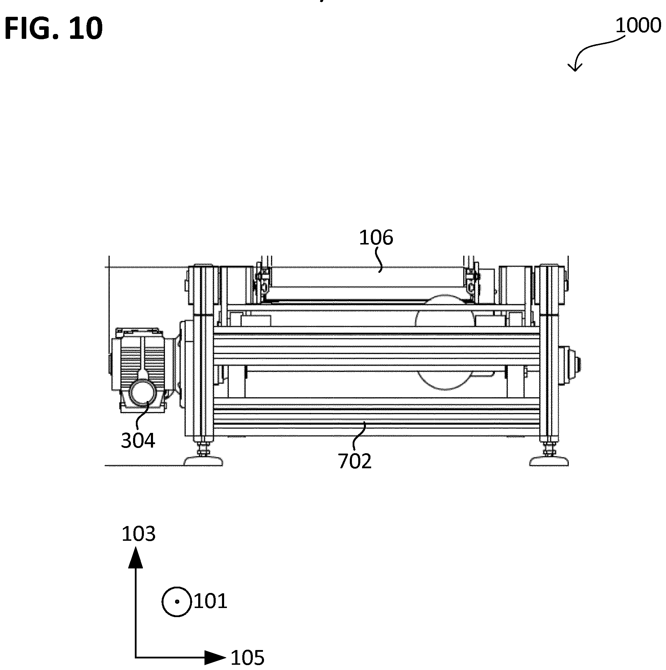

**Fig.10** veranschaulicht eine Transportanordnung 1000 gemäß verschiedenen Ausführungsformen in einer schematischen Querschnittsansicht oder Seitenansicht (z.B. entlang der Transportrichtung 111). Die Transportanordnung 1000 kann eingerichtet sein, wie einer der zuvor beschriebenen Transportanordnungen, wobei der Antrieb 304 außerhalb des Gestells 702 angeordnet sein oder werden kann.

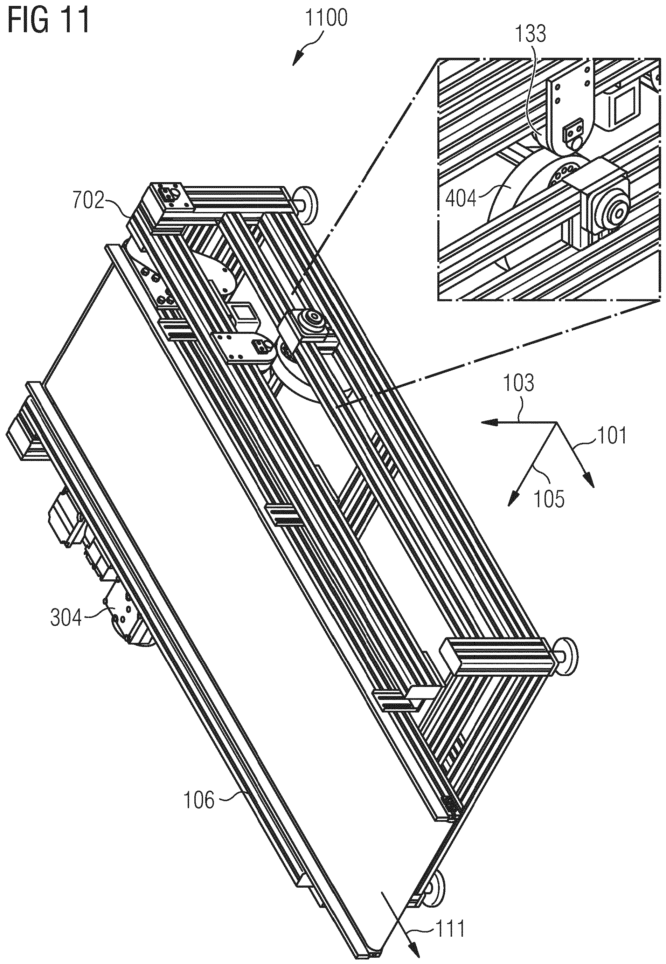

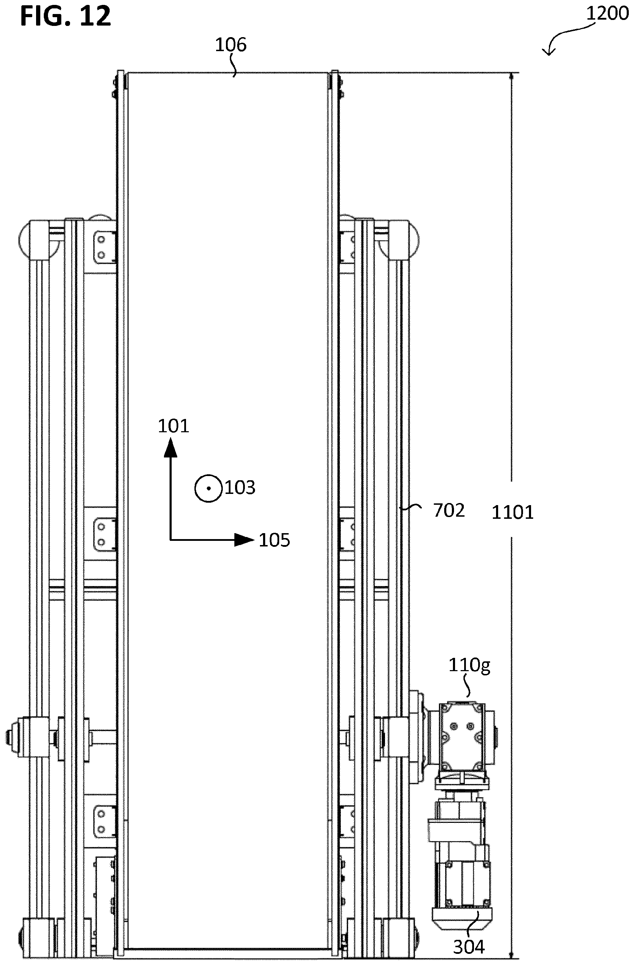

**Fig.11** veranschaulicht eine Transportanordnung 1100 (z.B. die Transportanordnung 900) gemäß verschiedenen Ausführungsformen in einer schematischen Perspektivansicht und **Fig.12** in einer schematischen Draufsicht 1200. Die Transportanordnung 12100 kann eingerichtet sein, wie einer der zuvor beschriebenen Transportanordnungen, wobei der Antrieb 304 außerhalb (alternativ innerhalb oder auch teilweise außerhalb und teilweise innerhalb) des Gestells 702 angeordnet sein oder werden kann.

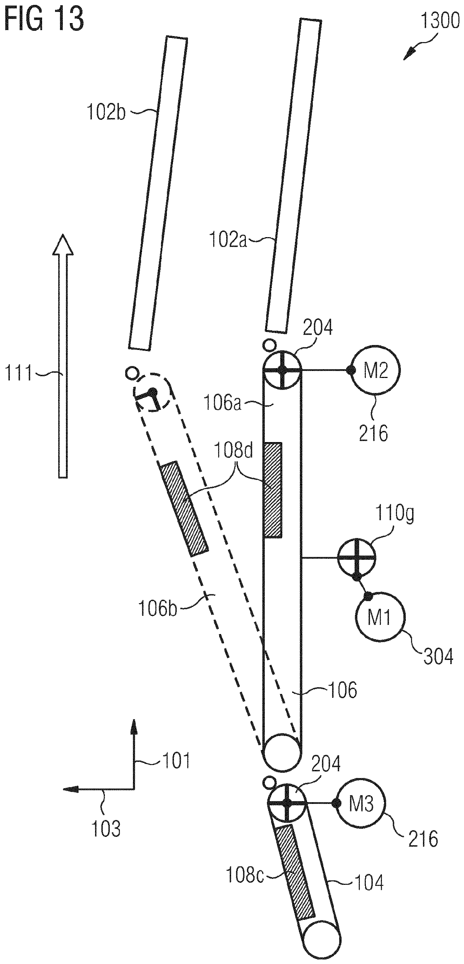

**Fig.13** veranschaulicht eine Transportanordnung 1300 gemäß verschiedenen Ausführungsformen in einer schematischen Querschnittsansicht oder Seitenansicht (z.B. entlang der Transportrichtung 111). Die Transportanordnung 1300 kann eingerichtet sein, wie einer der zuvor beschriebenen Transportanordnungen, z.B. Transportanordnung 100a, 100b, 200c, 300, 400a oder 400b.

Die Transportanordnung 1300 kann mehrere Antriebe 216, 304 aufweisen (z.B. Elektromotoren 216, 304).

Die Sensoranordnung 108 kann alternativ oder zusätzlich zu dem zumindest einen optischen Sensor 108a, 108b zumindest einen Gewichtssensor 108c, 108d (z.B. zumindest eine Waage 108c, 108d) aufweisen, z.B. einen ersten Gewichtssensor 108c (z.B. eine erste Waage 108c) und/oder einen zweiten Gewichtssensor 108d (z.B. eine zweite Waage 108d).

Gemäß verschiedenen Ausführungsformen kann der zumindest eine Gewichtssensor 108c, 108d eingerichtet sein, das Gewicht des Behälters 13 zu erfassen. Alternativ oder zusätzlich kann der zumindest eine Gewichtssensor 108c, 108d eingerichtet sein, die Anwesenheit des Behälters 13 auf dem jeweiligen Förderer 104, 106 zu erfassen.

Beispielsweise kann der erste Gewichtssensor 108c, wenn vorhanden, zum Erfassen des auf den Zuführförderer 104 wirkenden Gewichtes des Behälters 13 eingerichtet sein. In analoger Weise kann der zweite Gewichtssensor 108c, wenn vorhanden, zum Erfassen des auf den Verteilförderer 106 wirkenden Gewichtes des Behälters 13 eingerichtet sein.

Der erste Gewichtssensor 108c kann beispielsweise ermöglichen, dass das Gewicht des Behälters 13 erfasst werden kann, bevor dieser auf den Verteilförderer 106 gelangt, was ermöglicht, dessen Schwenkbewegung einzuleiten, bevor der Behälter 13 auf den Verteilförderer 106 gelangt. Dies kann das Verteilen mittels des Verteilförderers 106 beschleunigen.

Beispielsweise kann der zweite Gewichtssensor 108d gemeinsam mit dem Verteilförderer 106 geschwenkt werden. Damit kann erreicht werden, dass in jeder Position des Verteilförderers 106 das Gewicht des Behälters 13 zuverlässig erfasst werden kann, da beispielsweise mehr Zeit zur Verfügung steht (welche beispielsweise während der Schwenkbewegung 106s vergeht).

Beispielsweise kann der erste Gewichtssensor 108c, wenn vorhanden, in den Zuführförderer 104 integriert sein. Beispielsweise kann dessen Transportband auf dem ersten Gewichtssensor 108c aufliegen.

Beispielsweise kann der zweite Gewichtssensor 108d, wenn vorhanden, in den Verteilförderer 106 integriert sein. Beispielsweise kann dessen Transportband auf dem zweiten Gewichtssensor 108d aufliegen.

Beispielsweise kann der zumindest eine Gewichtssensor 108c, 108d eingerichtet sein, ein Gewicht in einem Bereich von ungefähr 1 kg (Kilogramm) bis ungefähr 5 kg zu erfassen, zum Beispiel in einem Bereich von ungefähr 3 kg (Kilogramm) bis ungefähr 4 kg. Optional kann der Gewichtssensor 108c, 108d auch einstellbar auf ein Mindestgewicht eingerichtet sein, z.B. derart, dass er unterhalb des Mindestgewichtes kein Gewicht erfasst. Entspricht das Mindestgewicht dem Gewicht-Schwellenwert kann anschaulich lediglich die Anwesenheit eines Behälters 13 erfasst werden, der das Kriterium erfüllt.

Beispielsweise kann der zumindest eine Gewichtssensor 108c, 108d einstellbar auf ein Mindestgewicht von in einem Bereich von ungefähr 3,5 kg bis ungefähr 5 kg eingerichtet sein.

Optional kann die Schwenksteuervorrichtung 110 eingerichtet sein, den zumindest einen Förderantrieb 216 zu stoppen, wenn die Anwesenheit eines Behälters 13 erfasst wurde. Danach kann die Schwenksteuervorrichtung 110 das Gewicht mittels des zumindest einen Gewichtssensors 108c, 108d erfassen, und nach dem Erfassen des Gewichts, den zumindest einen Förderantrieb 216 wieder zu starten. Anschaulich kann der Transport des Behälters 13 unterbrochen werden, bis sein Gewicht erfasst wurde. Dies kann es ermöglichen die Sicherheit zu erhöhen und/oder die Messgenauigkeit zu erhöhen.

Alternativ zu einem einzelnen ersten Gewichtssensor 108c können mehrere erste Gewichtssensoren 108c verwendet werden, welche eingerichtet sind, ein Gewicht auf dem Zuführförderer 104 zu erfassen. Alternativ zu einem einzelnen zweiten Gewichtssensor 108d können mehrere zweite Gewichtssensoren 108c verwendet werden, welche eingerichtet sind, ein Gewicht auf dem Verteilförderer 106 zu erfassen. Die mehreren ersten/zweiten Gewichtssensoren 108c, 108d können beispielsweise eingerichtet sein das Gewicht aufeinanderfolgender Behälter 13 parallel (anders ausgedrückt zumindest teilweise gleichzeitig) zu erfassen und/oder das Gewicht eines Behälters 13 nacheinander mehrmals zu erfassen. Dies kann die Arbeitsgeschwindigkeit und/oder die Messgenauigkeit erhöhen.

Der zumindest eine Gewichtssensor 108c, 108d (z.B. die erste Waage 108c und/oder die zweite Waage 108d), bzw. allgemein die Sensoranordnung 108, ermöglicht eine Unabhängigkeit des Förderers von der Art des Rücknahmeautomaten. Damit lässt sich die Entwicklung, Konstruktion, und Einrichtung der Rücknahmeanlage vereinfachen.

Im Allgemeinen verringert die lokale Erfassung des Behälters mittels der Sensoranordnung 108 nahe des Verteilförderers 106 die Fehleranfälligkeit der Transportanordnung. Beispielsweise besteht grundlegend das Risiko eines externen (z.B. vom Nutzer bewirkten) Eingriffs oder einer Störung, welche(r) den Leergutstrom verändert, z.B. indem Behälter entnommen und/oder hinzugefügt werden. Allerdings werden gemäß verschiedenen Ausführungsformen die Auswirkungen eines externen Eingriffs, z.B. die Möglichkeit der Entnahme von Leergut (z.B. Kästen) aus dem Leergutstrom durch einen Nutzer, d.h. auf dem Transportweg, auf die Verteiltätigkeit des Verteilförderers 106 mittels der lokalen Erfassung des Behälters (z.B. lokale Datenerfassung) verringert oder verhindert. Beispielsweise kann auf eine komplizierte Steuerung, welche in der Lage ist, das Leergut störungsfrei nachzuverfolgen und deren, z.B. an dem Rücknahmeautomat erfassten, Eigenschaften gegenüber externen Eingriffen störungsfrei und korrekt beizubehalten, verzichtet werden, was wiederum Kosten und Aufwand spart.

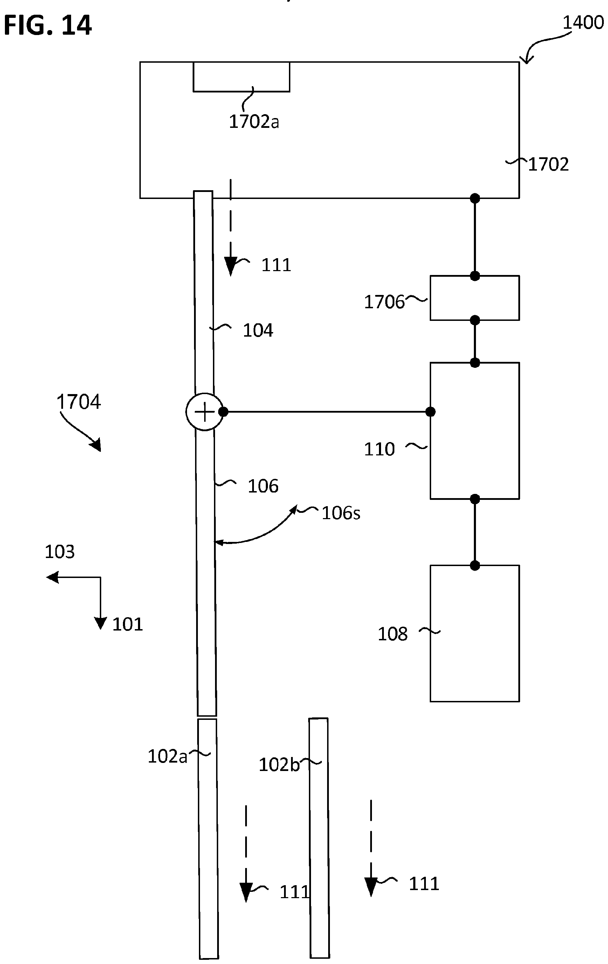

**Fig.14** veranschaulicht eine Leergutannahmeanordnung 1400 gemäß verschiedenen Ausführungsformen in einer schematischen Querschnittsansicht oder Seitenansicht (z.B. entlang der Transportrichtung 111).

Die Leergutannahmeanordnung 1400 kann einen Rücknahmeautomaten 1702 aufweisen und eine Transportanordnung 1704. Die Transportanordnung 1704 kann eingerichtet sein, wie einer der zuvor beschriebenen Transportanordnungen, z.B. Transportanordnung 100a, 100b, 200c, 300, 400a oder 400b.

Der Rücknahmeautomat 1702 kann einen Aufnahmebereich 1702a aufweisen, welcher eingerichtet sein kann, dem Rücknahmeautomaten 1702 einen Behälter 13 zuzuführen, z.B. eine Kiste 13, welche optional eine oder mehrerer Flaschen tragen kann.

Der Rücknahmeautomat 1702 kann eingerichtet sein, die Behälter 13 zu der Transportanordnung 1704 hin zu transportieren.

Optional kann der Rücknahmeautomat 1702 den zumindest einen optischen Sensor 108a, 108b aufweisen zum Erfassen der Farbeigenschaft und/oder des Logos des Behälters 13 (z.B. dessen Farbvalenz), z.B., wenn dieser in dem Aufnahmebereich 1702a angeordnet ist. In dem Fall können Daten, welche die Farbeigenschaft und/oder das Logo des Behälters 13 repräsentieren, zentral mittels eines Auswertungsschaltkreises 1706 verarbeitet werden und das Ergebnis kann beispielsweise der Schwenksteuervorrichtung 110 bereitgestellt werden, so dass diese die Schwenkbewegung 106s auf Grundlage der Farbeigenschaft und/oder des Logos, etc. ("voll", "nicht voll", "Typ des Behälters", etc.) steuern kann, z.B. wenn der betreffende Behälter 13 an dem Verteilförderer 106 angelangt.

Optional kann mittels einer Weiche 502, welche zum Ausschleusen von z.B. leeren Behältern (z.B. Leergut-Kästen) in abhängig von Daten, welche von einem oder mehreren Rücknahmeautomaten (siehe oben) bereitgestellt sind oder werden, eingerichtet ist, der Leergutstrom beeinflusst werden.

Optional kann die Sensoranordnung 108 eingerichtet sein zum Erkennen und/oder Verifizieren einer Störung, d.h. anschaulich eines "Fehlerfalls" (z.B. aufgrund einer temporären Störung, wie Deaktivierung oder Ausfall, der Weiche oder des Verteilförderers). Beispielsweise können im Fehlerfall volle Kästen zu der "leere Kästen"-Transportebene transportiert werden. Wird die Störung schnell erkannt, kann der Aufwand zu ihrer Korrektur verringert werden.

Beispielsweise kann mittels der Sensoranordnung 108 der Behälter, welcher die Farbeigenschaft aufweist (z.B. unter mehreren Behältern) identifiziert und/oder dessen Ankunft (Anwesenheit) erfasst werden. Zusätzlich kann die zumindest eine physische Eigenschaft erfasst und das Schwenken 106s des Verteilförderers 106 auf Grundlage der zumindest einen physischen Eigenschaft erfolgen.

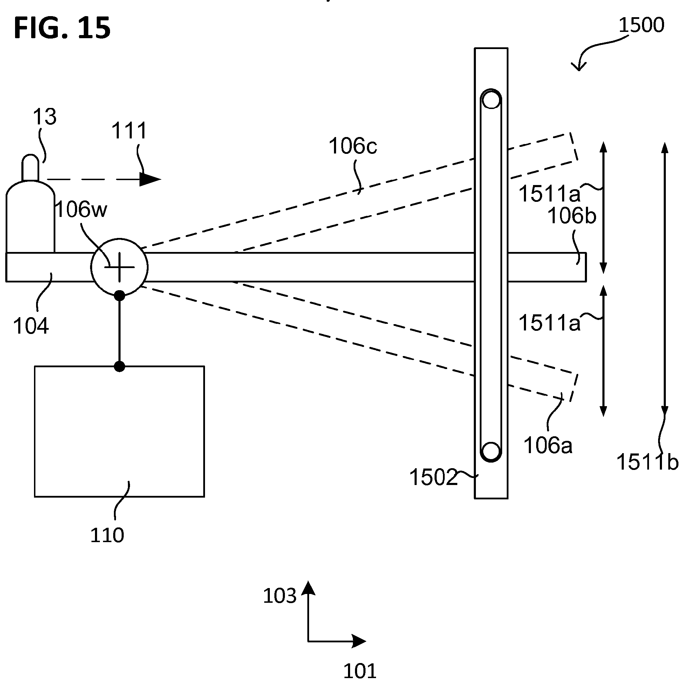

**Fig.15** veranschaulicht eine Transportanordnung 1500 gemäß verschiedenen Ausführungsformen in einer schematischen Querschnittsansicht oder Seitenansicht (z.B. entlang der Transportrichtung 111). Die Transportanordnung 1500 kann eingerichtet sein, wie einer der zuvor beschriebenen Transportanordnungen, z.B. Transportanordnung 100a, 100b, 200c, 300, 400a oder 400b.

Der Verteilförderer 106 kann in mehrere (z.B. drei oder mehr) Positionen 106a, 106b, 106c schwenkbar 106s gelagert sein, d.h. mittels einer Schwenkbewegung 106s zwischen den mehreren Positionen 106a, 106b verlagert werden, z.B. zwischen einer ersten Schwenkposition 106a, einer zweiten Schwenkposition 106b und zumindest einer dritten Schwenkposition 106c (z.B. die dritte Position oder zusätzliche dritte Position).

Die Transportanordnung 1500 kann einen Servoantrieb 1502 aufweisen, welcher ein (z.B. lineares) Bewegungsgetriebe 110g (z.B. ein Zugmittel aufweisend) und einen Servomotor aufweisen kann. Der Servoantrieb 1502 kann beispielsweise eingerichtet sein, eine elektronische Lage-, Geschwindigkeits- und/oder Momentenregelung bereitzustellen, z.B. zum Steuern und/oder Regeln einer Amplitude-Zeit-Charakteristik (d.h. Zeitabhängigkeit der Amplitude) der Schwenkbewegung 106s.

Der Servoantrieb 1502 kann beispielsweise einen Servoverstärker (z.B. einen Servoregler und/oder eine Servosteuerung) aufweisen, welcher eingerichtet ist, die Drehzahl- und/oder das Drehmoment des Servomotors leistungselektronisch zu steuern und/oder zu regeln, z.B. mittels einer Frequenz und/oder einer Amplitude der dem Servomotor eingekoppelten elektrischen Wechselspannung (z.B. dreiphasige Wechselspannung). Beispielsweise kann der Servoverstärker zumindest ein Frequenz-Stellglied und/oder zumindest ein Amplituden-Stellglied aufweisen.

Der Servomotor kann zumindest einen Sensor aufweisen, welcher zum Erfassen einer Drehposition des Servomotors (z.B. dessen Motorwelle) eingerichtet ist. Die vom Sensor ermittelte Drehposition kann, z.B. kontinuierlich, an den Servoverstärker übermittelt und/oder von diesem ausgelesen werden, wobei der Servoverstärker die Drehbewegung des Motors entsprechend einem oder mehreren einstellbaren Sollwerten - wie etwa Soll-Winkelposition der Motorwelle oder Solldrehzahl - mittels einer Steuerstrecke steuern und/oder mittels eines Regelkreises regeln kann.

Gemäß verschiedenen Ausführungsformen kann eine Steuerung eine nach vorn gerichtete Steuerstrecke aufweisen und somit anschaulich eine Ablaufsteuerung implementieren, welche eine Eingangsgröße in eine Ausgangsgröße umsetzt. Die Steuerstrecke kann aber auch Teil eines Regelkreises sein, so dass eine Regelung implementiert wird. Die Regelung weist im Gegensatz zu der reinen Vorwärts-Steuerung eine fortlaufende Einflussnahme der Ausgangsgröße auf die Eingangsgröße auf, welche durch den Regelkreis bewirkt wird (Rückführung). Gemäß verschiedenen Ausführungsformen kann die Steuerungsvorrichtung eine Steuerung und/oder eine Regelung bereitstellen.

Beispielsweise kann der Servoantrieb 1502 derart eingerichtet sein, dass dieser einer ersten Schwenkbewegung 1511a zwischen zwei einander benachbarten Schwenkpositionen eine erste (z.B. sinusförmige) Amplitude-Zeit-Charakteristik bereitstellt, z.B. beim Wechsel von der ersten Schwenkposition 106a in die zweite Schwenkposition 106b (bzw. andersherum) und/oder beim Wechsel von der dritten Schwenkposition 106c in die zweite Schwenkposition 106b (bzw. andersherum). Alternativ oder zusätzlich kann der Servoantrieb 1502 derart eingerichtet sein, dass dieser einer Schwenkbewegung 1511b zwischen zwei Schwenkpositionen durch eine andere Schwenkposition hindurch (d.h. zwischen zwei Schwenkpositionen, zwischen denen eine andere Schwenkposition angeordnet ist) eine zweite (z.B. sinusförmige) Amplitude-Zeit-Charakteristik bereitstellt, z.B. beim Wechsel von der ersten Schwenkposition 106a in die dritte Schwenkposition 106c (bzw. andersherum).

Optional können die erste Amplitude-Zeit-Charakteristik und die zweite Amplitude-Zeit-Charakteristik ineinander transformierbar sein, z.B. mittels einer Koordinatentransformation, Streckung oder Stauchung. Anschaulich kann die zweite Amplitude-Zeit-Charakteristik mehr Zeit benötigen und/oder ein größeres Extremum aufweisen als die erste Amplitude-Zeit-Charakteristik, aber dasselbe Amplitude-Zeit-Profil aufweisen wie die erste Amplitude-Zeit-Charakteristik.

Beispielsweise können erste Amplitude-Zeit-Charakteristik a₁(t) und die zweite Amplitude-Zeit-Charakteristik a₂(t) folgende Relation erfüllen: c₁·a₁(c₂·t)=a₂(t), z.B. a₁(c₂·t)=a₂(t) oder c₁·a₁(t)=a₂(t), wobei c₁ und c₂ rationale Zahlen ungleich null sind (auch als Streckungsfaktor bzw. Stauchungsfaktor bezeichnet), von denen zumindest eine Zahl ungleich 1 ist, und t die Zeit (z.B. in Sekunden) ist. Beispielsweise können a₁ und a₂ die Amplitude der Schwenkbewegung (auch als Schwenkamplitude bezeichnet) sein, z.B. der Schwenkwinkel oder der Schwenkhub. Der Schwenkhub kann verstanden werden als die vertikale Ortskomponente eines Punktes (z.B. der Spitze) des Verteilförderers 106.

Je nach Anordnung und/oder Ausbildung des Servoantriebs kann die (erste und/oder zweite) Amplitude-Zeit-Charakteristik beispielsweise eine sinusförmige Anhängigkeit von der Zeit aufweisen. Beispielsweise kann die Amplitude-Zeit-Charakteristik ein sinusförmiges Amplitude-Zeit-Profil aufweisen, z.B. kann der eine Sinusfunktion der Zeit sein. Allerdings kann der Servoantrieb auch eine nichtlineare Bewegungskomponente aufweisen und/oder schräg zur Vertikalen stehen, was zur Folge hat, dass die Sinusfunktion der Amplitude-Zeit-Charakteristik beispielsweise von weiteren Funktionen überlagert wird.

## Patentansprüche

1. Transportanordnung (100a, 100b, 200c, 300, 400a, 400b, 500a, 500b, 600, 700, 800, 900, 1000, 1100, 1300, 1500), aufweisend:
• eine Mehrebenen-Transportstrecke (102), welche eine erste Transportebene (102a) und eine darüber angeordnete zweite Transportebene (102b) aufweist;
• einen Zuführförderer (104) zum Zuführen eines Behälters in Richtung der Mehrebenen-Transportstrecke (102);
• einen Verteilförderer (106) zwischen dem Zuführförderer (104) und der Mehrebenen-Transportstrecke (102), wobei der Verteilförderer (106) an der Mehrebenen-Transportstrecke (102) zwischen der ersten Transportebene (102a) und der zweiten Transportebene (102b) schwenkbar gelagert ist zum Verteilen des Behälters auf die erste Transportebene (102a) oder die zweite Transportebene (102b);
• eine Sensoranordnung (108), welche eingerichtet ist, zumindest eine physische Eigenschaft des Behälters zu erfassen;
• eine Schwenksteuervorrichtung (110), welche eingerichtet ist, den Verteilförderer (106) zwischen der ersten Transportebene (102a) und der zweiten Transportebene (102b) zu schwenken, wenn die zumindest eine Eigenschaft ein vorgegebenes Kriterium erfüllt;
• wobei die Schwenksteuervorrichtung (110) ein Bewegungsgetriebe (110g) aufweist, welches eingerichtet ist, eine rotatorische Bewegung in eine das Schwenken des Verteilförderers (106) bewirkende translatorische Bewegung umzuwandeln;
**dadurch gekennzeichnet, dass**:
• das Bewegungsgetriebe (110g) einen Exzenter aufweist; oder,
• das Bewegungsgetriebe (110g) eine Spindel und/oder einen Kniehebel-Mechanismus aufweist.

2. Transportanordnung (100a, 100b, 200c, 300, 400a, 400b, 500a, 500b, 600, 700, 800, 900, 1000, 1100, 1300, 1500) gemäß Anspruch 1,
wobei die Schwenksteuervorrichtung (110) ferner einen Antrieb (304) aufweist, welcher eingerichtet ist, dem Bewegungsgetriebe die rotatorische Bewegung bereitzustellen.

3. Transportanordnung (100a, 100b, 200c, 300, 400a, 400b, 500a, 500b, 600, 700, 800, 900, 1000, 1100, 1300, 1500) gemäß Anspruch 1 oder 2,
wobei die Mehrebenen-Transportstrecke (102) eine zusätzliche Transportebene (112b) aufweist, welche an dem Verteilförderer (106) auf Höhe der ersten oder zweiten Transportebene (102a, 102b) ist; und
wobei die Transportanordnung (100a, 100b, 200c, 300, 400a, 400b, 500a, 500b, 600, 700, 800, 900, 1000, 1100, 1300, 1500) ferner eine horizontal-Verteilvorrichtung aufweist, welche zum Verteilen zwischen der ersten bzw. zweiten Transportebene (102a, 102b) und der zusätzlichen Transportebene (112b) eingerichtet ist;
wobei die Schwenksteuervorrichtung (110) eingerichtet ist, eine Transportrichtung der horizontal-Verteilvorrichtung umzuschalten zwischen zu der ersten bzw. zweiten Transportebene (102a, 102b) hin und zu der zusätzlichen Transportebene (112b) hin, wenn die zumindest eine Eigenschaft ein zusätzliches vorgegebenes Kriterium erfüllt.

4. Transportanordnung (100a, 100b, 200c, 300, 400a, 400b, 500a, 500b, 600, 700, 800, 900, 1000, 1100, 1300, 1500) gemäß einem der Ansprüche 1 bis 3,
wobei die zumindest eine Eigenschaft zumindest ein Gewicht des Behälters repräsentiert.

5. Transportanordnung (100a, 100b, 200c, 300, 400a, 400b, 500a, 500b, 600, 700, 800, 900, 1000, 1100, 1300, 1500) gemäß einem der Ansprüche 1 bis 4,
wobei die Sensoranordnung (108) einen ersten Gewichtssensor (108c) und/oder einen zweiten Gewichtssensor (108d) aufweist,
wobei der erste Gewichtssensor (108c) zum Erfassen eines auf den Zuführförderer (104) wirkenden Gewichtes eingerichtet ist;
wobei der zweite Gewichtssensor (108d) zum Erfassen eines auf den Verteilförderer (106) wirkenden Gewichtes eingerichtet ist;
wobei die zumindest eine Eigenschaft zumindest das mittels des ersten Gewichtssensors (108c) und/oder des zweiten Gewichtssensors (108d) erfasste Gewicht repräsentiert.

6. Transportanordnung (100a, 100b, 200c, 300, 400a, 400b, 500a, 500b, 600, 700, 800, 900, 1000, 1100, 1300, 1500) gemäß einem der Ansprüche 1 bis 5,
wobei der Zuführförderer (104) und/oder der Verteilförderer (106) ein Transportband aufweisen.

7. Transportanordnung (100a, 100b, 200c, 300, 400a, 400b, 500a, 500b, 600, 700, 800, 900, 1000, 1100, 1300, 1500) gemäß einem der Ansprüche 1 bis 6,
• wobei die Mehrebenen-Transportstrecke (102) eine dritte Transportebene (102c, 102d) aufweist, welche über oder unter dem Verteilförderer (106) angeordnet ist;
wobei der Zuführförderer (104) einen zusätzlichen Verteilförderer (116) aufweist, wobei der zusätzliche Verteilförderer (116) zwischen dem Verteilförderer (106) und der dritten Transportebene (102c, 102d) schwenkbar gelagert ist zum Verteilen des Zuführens auf die dritte Transportebene (102c, 102d) oder den Verteilförderer (106);
• wobei die Schwenksteuervorrichtung (110) ferner eingerichtet ist, den zusätzlichen Verteilförderer (116) zwischen der dritten Transportebene (102c, 102d) und dem Verteilförderer (106) zu schwenken, wenn die zumindest eine Eigenschaft ein vorgegebenes noch zusätzliches Kriterium erfüllt.

8. Transportanordnung (100a, 100b, 200c, 300, 400a, 400b, 500a, 500b, 600, 700, 800, 900, 1000, 1100, 1300, 1500) gemäß einem der Ansprüche 1 bis 7,
• wobei der Zuführförderer (104) eingerichtet ist, den Behälter und zumindest einen diesem unmittelbar nachfolgenden zusätzlichen Behälter mit einer Transportgeschwindigkeit und einem Abstand voneinander zu transportieren;
• wobei die Schwenksteuervorrichtung (110) eingerichtet ist, den Verteilförderer (106) innerhalb einer Zeitspanne zwischen der ersten Transportebene (102a) und der zweiten Transportebene (102b) zu schwenken, wobei die Zeitspanne dem Quotienten aus dem Abstand und der Transportgeschwindigkeit entspricht.

9. Leergutannahmeanordnung (1700), aufweisend:
• einen Rücknahmeautomaten (1702); und
• eine Transportanordnung (1704) gemäß einem der Ansprüche 1 bis 8 zum Transportieren eines von dem Rücknahmeautomaten (1702) angenommen Behälters.

## Claims

1. Transporting arrangement (100a, 100b, 200c, 300, 400a, 400b, 500a, 500b, 600, 700, 800, 900, 1000, 1100, 1300, 1500) having:
• a multi-level transporting path (102), which has a first transporting plane (102a) and a second transporting plane (102b), which is arranged above the first;
• a feed conveyor (104) for feeding a container in the direction of the multi-level transporting path (102);
• a distribution conveyor (106) between the feed conveyor (104) and the multi-level transporting path (102), wherein the distribution conveyor (106) is mounted on the multi-level transporting path (102) such that it can be pivoted between the first transporting level (102a) and the second transporting level (102b), for the purpose of distributing the container to the first transporting level (102a) or the second transporting level (102b);
• a sensor arrangement (108), which is designed to detect at least one physical property of the container;
• a pivoting-control device (110), which is designed to pivot the distribution conveyor (106) between the first transporting level (102a) and the second transporting level (102b) when the at least one property meets a predetermined criterion;
• wherein the pivoting-control device (110) has a movement-gear mechanism (110g), which is designed to convert a rotary movement into a translatory movement, which causes the distribution conveyor (106) to pivot;
**characterized in that**:
• the movement-gear mechanism (110g) has an eccentric; or
• the movement-gear mechanism (110g) has a spindle and/or a toggle-lever mechanism.

2. Transporting arrangement (100a, 100b, 200c, 300, 400a, 400b, 500a, 500b, 600, 700, 800, 900, 1000, 1100, 1300, 1500) according to Claim 1,
wherein the pivoting-control device (110) also has a drive (304), which is designed to supply the rotary movement to the movement-gear mechanism.

3. Transporting arrangement (100a, 100b, 200c, 300, 400a, 400b, 500a, 500b, 600, 700, 800, 900, 1000, 1100, 1300, 1500) according to Claim 1 or 2, wherein the multi-level transporting path (102) has an additional transporting level (112b), which is on the distribution conveyor (106) at the height of the first or second transporting level (102a, 102b); and
wherein the transporting arrangement (100a, 100b, 200c, 300, 400a, 400b, 500a, 500b, 600, 700, 800, 900, 1000, 1100, 1300, 1500) also has a horizontal distributor, which is designed for distribution between the first or second transporting level (102a, 102b) and the additional transporting level (112b);
wherein the pivoting-control device (110) is designed to switch over a transporting direction of the horizontal distributor between orientation towards the first or second transporting level (102a, 102b) and orientation towards the additional transporting level (112b) when the at least one property meets an additional predetermined criterion.

4. Transporting arrangement (100a, 100b, 200c, 300, 400a, 400b, 500a, 500b, 600, 700, 800, 900, 1000, 1100, 1300, 1500) according to one of Claims 1 to 3,
wherein the at least one property represents at least one weight of the container.

5. Transporting arrangement (100a, 100b, 200c, 300, 400a, 400b, 500a, 500b, 600, 700, 800, 900, 1000, 1100, 1300, 1500) according to one of Claims 1 to 4,
wherein the sensor arrangement (108) has a first weight sensor (108c) and/or a second weight sensor (108d),
wherein the first weight sensor (108c) is designed to detect a weight which is acting on the feed conveyor (104);
wherein the second weight sensor (108d) is designed to detect a weight which is acting on the distribution conveyor (106);
wherein the at least one property represents at least the weight detected by means of the first weight sensor (108c) and/or by means of the second weight sensor (108d).

6. Transporting arrangement (100a, 100b, 200c, 300, 400a, 400b, 500a, 500b, 600, 700, 800, 900, 1000, 1100, 1300, 1500) according to one of Claims 1 to 5,
wherein the feed conveyor (104) and/or the distribution conveyor (106) have/has a transporting belt.

7. Transporting arrangement (100a, 100b, 200c, 300, 400a, 400b, 500a, 500b, 600, 700, 800, 900, 1000, 1100, 1300, 1500) according to one of Claims 1 to 6,
• wherein the multi-level transporting path (102) has a third transporting level (102c, 102d), which is arranged above or beneath the distribution conveyor (106);
wherein the feed conveyor (104) has an additional distribution conveyor (116), wherein the additional distribution conveyor (116) is mounted such that it can be pivoted between the distribution conveyor (106) and the third transporting level (102c, 102d), for distribution of the feed to the third transporting level (102c, 102d) or the distribution conveyor (106);
• wherein the pivoting-control device (110) is also designed to pivot the additional distribution conveyor (116) between the third transporting level (102c, 102d) and the distribution conveyor (106) when the at least one property meets a predetermined further criterion.

8. Transporting arrangement (100a, 100b, 200c, 300, 400a, 400b, 500a, 500b, 600, 700, 800, 900, 1000, 1100, 1300, 1500) according to one of Claims 1 to 7,
• wherein the feed conveyor (104) is designed to transport the container and at least one additional container, which immediately follows the previously mentioned container, at a transporting speed and a distance apart from one another;
• wherein the pivoting-control device (110) is designed to pivot the distribution conveyor (106) between the first transporting level (102a) and the second transporting level (102b) within a period of time, wherein the period of time corresponds to the quotient made up of the distance and the transporting speed.

9. Empty-container-receiving arrangement (1700) having:
• a reverse-vending machine (1702); and
• a transporting arrangement (1704) according to one of Claims 1 to 8 for transporting a container received by the reverse-vending machine (1702).

## Revendications

1. Agencement de transport (100a, 100b, 200c, 300, 400a, 400b, 500a, 500b, 600, 700, 800, 900, 1000, 1100, 1300, 1500), comprenant :
- une section de transport à plusieurs plans (102), qui comprend un premier plan de transport (102a) et un deuxième plan de transport (102b) agencé au-dessus ;
- un convoyeur d'alimentation (104) pour l'alimentation d'un contenant en direction de la section de transport à plusieurs plans (102) ;
- un convoyeur de distribution (106) entre le convoyeur d'alimentation (104) et la section de transport à plusieurs plans (102), le convoyeur de distribution (106) étant monté de manière pivotante au niveau de la section de transport à plusieurs plans (102) entre le premier plan de transport (102a) et le deuxième plan de transport (102b) pour la distribution du contenant sur le premier plan de transport (102a) ou le deuxième plan de transport (102b) ;
- un agencement de capteur (108), qui est conçu pour détecter au moins une propriété physique du contenant ;
- un dispositif de commande de pivotement (110), qui est conçu pour faire pivoter le convoyeur de distribution (106) entre le premier plan de transport (102a) et le deuxième plan de transport (102b) lorsque l'au moins une propriété satisfait un critère prédéfini ;
- le dispositif de commande de pivotement (110) comprenant une transmission de mouvement (110g), qui est conçue pour convertir un mouvement de rotation en un mouvement de translation provoquant le pivotement du convoyeur de distribution (106) ;
**caractérisé en ce que** :
- la transmission de mouvement (110g) comprend un excentrique ; ou
- la transmission de mouvement (110g) comprend une broche et/ou un mécanisme à genouillère.

2. Agencement de transport (100a, 100b, 200c, 300, 400a, 400b, 500a, 500b, 600, 700, 800, 900, 1000, 1100, 1300, 1500) selon la revendication 1,
dans lequel le dispositif de commande de pivotement (110) comprend en outre un entraînement (304), qui est conçu pour fournir le mouvement de rotation à la transmission de mouvement.

3. Agencement de transport (100a, 100b, 200c, 300, 400a, 400b, 500a, 500b, 600, 700, 800, 900, 1000, 1100, 1300, 1500) selon la revendication 1 ou 2,
dans lequel la section de transport à plusieurs plans (102) comprend un plan de transport supplémentaire (112b), qui est à hauteur du premier ou du deuxième plan de transport (102a, 102b) sur le convoyeur de distribution (106) ; et
dans lequel l'agencement de transport (100a, 100b, 200c, 300, 400a, 400b, 500a, 500b, 600, 700, 800, 900, 1000, 1100, 1300, 1500) comprend en outre un dispositif de distribution horizontal, qui est conçu pour la distribution entre le premier ou le deuxième plan de transport (102a, 102b) et le plan de transport supplémentaire (112b) ;
dans lequel le dispositif de commande de pivotement (110) est conçu pour commuter une direction de transport du dispositif de distribution horizontal entre le premier ou le deuxième plan de transport (102a, 102b) et le plan de transport supplémentaire (112b) lorsque l'au moins une propriété satisfait un critère prédéfini supplémentaire.

4. Agencement de transport (100a, 100b, 200c, 300, 400a, 400b, 500a, 500b, 600, 700, 800, 900, 1000, 1100, 1300, 1500) selon l'une quelconque des revendications 1 à 3,
dans lequel l'au moins une propriété représente au moins un poids du contenant.

5. Agencement de transport (100a, 100b, 200c, 300, 400a, 400b, 500a, 500b, 600, 700, 800, 900, 1000, 1100, 1300, 1500) selon l'une quelconque des revendications 1 à 4,
dans lequel l'agencement de capteur (108) comprend un premier capteur de poids (108c) et/ou un deuxième capteur de poids (108d),
dans lequel le premier capteur de poids (108c) est conçu pour la détection d'un poids agissant sur le convoyeur d'alimentation (104) ;
dans lequel le deuxième capteur de poids (108d) est conçu pour la détection d'un poids agissant sur le convoyeur de distribution (106) ;
dans lequel l'au moins une propriété représente au moins le poids détecté au moyen du premier capteur de poids (108c) et/ou du deuxième capteur de poids (108d).

6. Agencement de transport (100a, 100b, 200c, 300, 400a, 400b, 500a, 500b, 600, 700, 800, 900, 1000, 1100, 1300, 1500) selon l'une quelconque des revendications 1 à 5,
dans lequel le convoyeur d'alimentation (104) et/ou le convoyeur de distribution (106) comprennent une bande de transport.

7. Agencement de transport (100a, 100b, 200c, 300, 400a, 400b, 500a, 500b, 600, 700, 800, 900, 1000, 1100, 1300, 1500) selon l'une quelconque des revendications 1 à 6,
- dans lequel la section de transport à plusieurs plans (102) comprend un troisième plan de transport (102c, 102d), qui est agencé au-dessus ou en dessous du convoyeur de distribution (106) ;
dans lequel le convoyeur d'alimentation (104) comprend un convoyeur de distribution supplémentaire (116), le convoyeur de distribution supplémentaire (116) étant monté de manière pivotante entre le convoyeur de distribution (106) et le troisième plan de transport (102c, 102d) pour la distribution de l'alimentation sur le troisième plan de transport (102c, 102d) ou le convoyeur de distribution (106) ;
- dans lequel le dispositif de commande de pivotement (110) est en outre conçu pour faire pivoter le convoyeur de distribution supplémentaire (116) entre le troisième plan de transport (102c, 102d) et le convoyeur de distribution (106) lorsque l'au moins une propriété satisfait un critère prédéfini encore supplémentaire.

8. Agencement de transport (100a, 100b, 200c, 300, 400a, 400b, 500a, 500b, 600, 700, 800, 900, 1000, 1100, 1300, 1500) selon l'une quelconque des revendications 1 à 7,
- dans lequel le convoyeur d'alimentation (104) est conçu pour transporter le contenant et au moins un contenant supplémentaire directement consécutif à celui-ci à une vitesse de transport et avec un écart entre eux ;
- dans lequel le dispositif de commande de pivotement (110) est conçu pour faire pivoter le convoyeur de distribution (106) pendant une période de temps entre le premier plan de transport (102a) et le deuxième plan de transport (102b), la période de temps correspondant au quotient de l'écart et de la vitesse de transport.

9. Agencement de réception d'articles vides (1700), comprenant :
- un automate de reprise (1702) ; et
- un agencement de transport (1704) selon l'une quelconque des revendications 1 à 8 pour le transport d'un contenant reçu par l'automate de reprise (1702).
